# EUROPEAN PATENT APPLICATION

(11) **EP 1 274 245 A2**
(43) Date of publication of application: **08.01.2003**
(21) Application number: 02011550.7
(22) Date of filing: 24.05.2002
(51) Int. Cl.: H04N 7/173, H04N 7/24

(54) **Content distribution system and distribution method**

(30) Priority: 29.06.2001 JP 2001197727
(71) Applicant: MATSUSHITA ELECTRIC INDUSTRIAL CO., LTD., Kadoma-shi, Osaka 571-8501 (JP)
(72) Inventor: Mochizuki, Yoshiyuki, Suita-shi, Osaka 564-0025 (JP)
(74) Representative: Balsters, Robert

(57) **Abstract**

In a reproduction device 1, a content element selecting unit 101 selects a content and a background video material, a foreground video material and a sound material via a dialogue with a user, and sends the selected content and materials to a distribution device 2 via a sending and receiving unit 103. A content controlling unit 102 performs a request and controls of content data such as a sending request, a receiving control management, a time control, a display control of a video material, and an output control of video data, based on scene description data which is sent from the distribution device 2. A content displaying device 104 and a content sound outputting unit 105 reproduce video data and sound data which are outputted from the content controlling unit 102. In the distribution device 2, an authoring unit 202 reads out each data from a scene description database 204, a video material database 205 and a sound material database 206 based on details of the content selection which are sent from the reproduction device 1 via a sending and receiving unit 201.

## Description

### BACKGROUND OF THE INVENTION

### (1) Field of the Invention

The present invention relates to a content distribution system that distributes a multimedia content including videos and sounds from a distribution device to a reproduction device via a communication medium.

### (2) Description of the Prior Art

In recent year, with advances in data compression technology, a multimedia content stream including videos and sounds has been distributed via a communication medium such as a BS digital broadcasting network, Internet and a mobile communication network. In the BS digital broadcasting, for example, we can view and listen to a digital TV program and data broadcasting multiplexed on it. Also, in the world of the Internet, we can receive and enjoy a content stream including videos and sounds. It has been possible to distribute videos and sounds using a wideband communication network (W-CDMA) in the mobile communication network.

Under the circumstances, there are prior arts concerning a transfer method of stream data, distribution of an enhanced content and sending and receiving of a video stream, such as Japanese Laid-Open Patent Application H09-275553 "Stream Data Transfer Method and Device", Japanese Laid-Open Patent Application H11-155134 "Method and System for Providing Enhanced Content along with Broadcasting Video", and Japanese Laid-Open Patent Application H11-331810 "Video Stream Sending and Receiving System".

There is also a prior art concerning billing in this kind of stream distribution, such as Japanese Laid-Open Patent Application H08-32530 "Data Broadcasting and Data Receiving Device".

Furthermore, there is a prior art concerning a video stream viewing technology, such as U.S. Patent No. 5,963, 215. This is an application of a technology for three-dimensional computer graphics, which maps a plurality of video streams on rectangular planes of a polyhedron for viewing.

However, according to the above-mentioned prior arts concerning sending and receiving of stream data, a user can view and listen to only a rectangular video and a sound that a content creator creates, and cannot select a background video nor a foreground video in the content video. That is, all that a user can select freely is an entire content work.

Also, according to the above-mentioned prior art concerning billing, since only one pricing can be decided per content work, a user has no selection but to pay the fee reluctantly even if he/she is not satisfied with a background video or a foreground video unsuitable to his/her taste in the content. That is, according to this prior art, the billing is based on the data volume of the content, not on elements included in the content.

Furthermore, according to the above-mentioned prior art concerning a video stream viewing technology, it is impossible to modify the elements of the video stream (an exchange of a background or a foreground, for example) because no consideration is given to it.

As a result, there is a problem that these prior arts do not give users full satisfaction in terms of the content itself, nor convince them fully in terms of the price of the content because their diversified tastes for videos, music and others are not reflected.

### SUMMARY OF THE INVENTION

It is accordingly the first object of the present invention, in the light of the above-mentioned problem, to provide a content distribution system that can offer a user not only a selection of a content work but also a wider selection of a content element.

More specifically, the present invention provides a content distribution system and a distribution method that can offer a user not only a selection of a content work but also a selection of a content element such as a background video, a foreground video like a person and a non-living thing, or a sound, and further a selection of a layout of the elements to the user's taste, when the user views and listens to the content work.

Furthermore, differently from the prior art that charges a single price for a content work, the second object of the present invention is to provide a content distribution system, etc. including a billing system in which various prices can be charged corresponding to a material such as a background video, a foreground video and a sound which a user selects to his/her taste, and various prices can be decided corresponding to a person and a non-living thing which appear in the content so as to exercise the copyright and the portrait right of them.

Furthermore, the third object of the present invention is to provide a content distribution system, etc. in which a user can efficiently view a plurality of rectangular windows showing video streams on the same screen simultaneously.

In order to achieve the above-mentioned first object, the content distribution system according to the present invention comprises a distribution device that distributes a content via a communication medium and a reproduction device for viewing and listening to the distributed content, wherein the reproduction device includes: a content selecting unit operable to accept from a user a selection of a content and a selection of a background video material and a foreground video material included in the content; a selection information sending unit operable to send information on the selection which is accepted by the content selecting unit to the distribution device; a content controlling unit operable to receive material data which is distributed from the distribution device and output the material data as video data; and a content displaying unit operable to display the video data which is outputted from the content controlling unit, and the distribution device includes a material data distributing unit operable to distribute corresponding material data to the reproduction device based on the information from the reproduction device.

Specifically, the selection information sending unit sends identifiers which specifies the content and the background video material and the foreground video material included in the content which the user selects to the distribution device, the content controlling unit performs a sending request of material data and a time management of the sending request based on scene description data which is sent from the distribution device, and receives the material data which is distributed from the distribution device and outputs the material data as video data, the distribution device further includes a scene description data generating unit operable to generate scene description data which describes the material data included in the content including the background video material and the foreground video material and a reproduction timing of the material data based on the identifiers which are sent from the selection information sending unit, and send the scene description data to the reproduction device, and the material data distributing unit selects corresponding material data based on the sending request from the reproduction device and distributes the material data to the reproduction device.

Accordingly, a user can select and specify not only a content that he/she wants to be distributed but also a background video and a foreground video included in the content. That is, the user has a wider selection of not only a content itself but also a content video element.

Here, the content selecting unit may accept from a user a selection of a content and a selection of a background video material and a foreground video material included in the content, and accept an editing of a display position and a reproduction time of the background video material and the foreground video material, the reproduction device may further include a scene description data generating unit operable to generate scene description data which describes material data included in the content and a reproduction timing of the material data based on the selection and the editing which the content selecting unit accepts, the selection information sending unit may send the scene description data along with the identifier which specifies the content which the user selects, and the material data distributing unit may distribute material data to the reproduction device based on the identifier and the scene description data which are sent from the reproduction device.

Accordingly, a user can also edit a display position and a reproduction time of a background video material and a foreground video material included in a content just as the user's style, and therefore the user can experience gratification as if he enjoys his/her original content work that he/she creates as a producer.

Also, the content selecting unit may accept from a user a selection of a content and a selection of a background video material and a foreground video material included in the content, and accept an editing of a display position and a reproduction time of the background video material and the foreground video material, the reproduction device may further include a scene description data generating unit operable to generate scene description data which describes material data included in the content and a reproduction timing of the material data based on the selection and the editing, and output the scene description data along with an identifier which specifies the selected content, the content controlling unit may perform a sending request of material data and a time management of the sending request via the selection information sending unit based on the scene description data which is outputted from the scene description data generating unit, and receive the material data which is distributed from the distribution device and output the material data as video data, and the material data distributing unit may distribute corresponding material data to the reproduction device based on the identifier and the sending request from the reproduction device.

Accordingly, a user can customize details of a content such as a display position and a reproduction time of a video material to his/her taste. In addition, as the details of the user's original editing are generated as scene description data in the reproduction device, interpreted in the reproduction device and used for the sending request control for the distribution device, the need for the interpretation of the scene description data per user and the control based on the interpretation results is eliminated, and therefore the processing load in the distribution device can be lessened (or decentralized to each reproduction device).

Also, in order to achieve the above-mentioned second object, in the content distribution system according to the present invention, the scene description data generating unit includes: a scene description database which holds in advance scene description data on a plurality of contents which are to be selected; and an authoring unit operable to read out, from the scene description database, scene description data corresponding to a content indicated by the identifier which is sent from the selection information sending unit, revise the read-out scene description data with information which specifies a material indicated by the identifier, and generate the revised scene description data, and the distribution device further includes a billing unit operable to determine a charging price for the distribution of the content by referring to a price list which is held in advance based on the scene description data which is generated by the authoring unit, and generate price data indicating the charging price.

Or, the material data distributing unit includes: a material database which holds in advance a plurality of video material data and a plurality of sound material data which are to be selected; and an authoring unit operable to read out corresponding video material data and sound material data from the material database based on the sending request or the scene description data from the reproduction device, and distribute the video material data or sound material data to the reproduction device, and the distribution device further includes a billing unit operable to determine a charging price for the distribution of the content by reading out prices corresponding to the video material data and the sound material data which the authoring unit reads out from a price list which is held in advance, and generate price data indicating the charging price.

Accordingly, not a uniform price system per content work, but more detailed price system can be applied corresponding to a material selected by a user, which is more satisfying to the user. Also, according to this billing system, as the price is charged to each material included in the content, not to the entire content, there is a merit of dealing with the material individually in terms of a copyright or a portrait right.

Furthermore, in order to achieve the above-mentioned third object, in the content distribution system according to the present invention, the content selecting unit shows a user a virtual video object corresponding to the selected background video material and foreground video material, and accepts the editing of the display position including a position on a screen and an order of depth by a user's operation on the video object. Accordingly, a user can view a plurality of rectangular windows showing video streams efficiently on the same screen simultaneously by selecting a plurality of foreground video materials to the user's taste.

Furthermore, the present invention can be realized as a single unit of a distribution device or a reproduction device included in the content distribution system, as a content distribution method including a step that is a component of the content distribution system, or as a program causing a computer to function as the step, for distribution of a content via a recording medium such as a CD-ROM and a communication network or a transmission medium.

As described above, it is believed that the present invention produces a new type of entertainments and benefits for a user, and its practical value is extremely high.

### BRIEF DESCRIPTION OF THE DRAWINGS

These and other objects, advantages and features of the invention will become apparent from the following description thereof taken in conjunction with the accompanying drawings that illustrate a specific embodiment of the invention. In the Drawings:
Fig. 1 is a functional block diagram showing a configuration of a content distribution and billing system according to the first embodiment for the present invention.
Fig. 2 is a sequence showing operations of the system of the first embodiment.
Fig. 3 is a tree showing an example of a content selection in the system of the first embodiment.

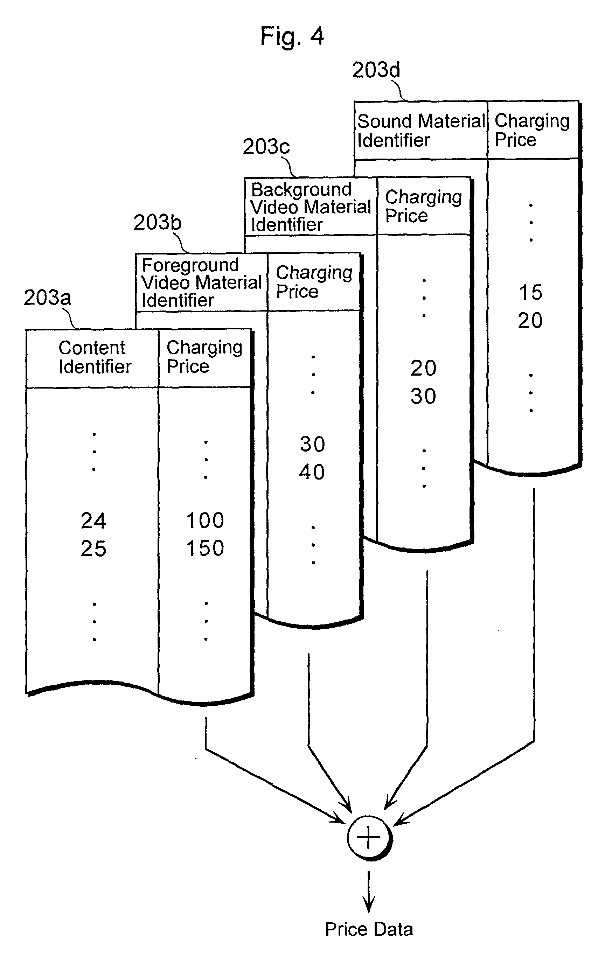

Fig. 4 is a diagram showing a data structure of a price list included in a billing unit of a distribution device in the system of the first embodiment.
Fig. 5 is a diagram showing a data structure of a scene description data packet and a multiplex stream packet.
Fig. 6 is a functional block diagram showing a detailed configuration of a content controlling unit of a reproduction device in the system of the first embodiment.
Fig. 7 is a diagram showing an example of a content reproduction in the reproduction device.
Fig. 8 is a functional block diagram showing a configuration of a content distribution and billing system according to the second embodiment for the present invention.
Fig. 9 is a sequence showing operations of the system of the second embodiment.
Fig. 10 is an example of a graphical user interface which a content element selection editing unit of a reproduction device in the system of the second embodiment.
Fig. 11 is a functional block diagram showing a detailed configuration of a content controlling unit of the reproduction device in the system of the second embodiment.
Fig. 12 is a functional block diagram showing a configuration of a content distribution and billing system according to the third embodiment for the present invention.
Fig. 13 is a sequence showing operations of the system of the third embodiment.
Fig. 14 is a functional block diagram showing a detailed configuration of a content controlling unit of a reproduction device in the system of the third embodiment.

### DESCRIPTION OF THE PREFERRED EMBODIMENTS

### (The First Embodiment)

The following is an explanation of the content distribution and billing system of the first embodiment for the present invention with reference to figures.

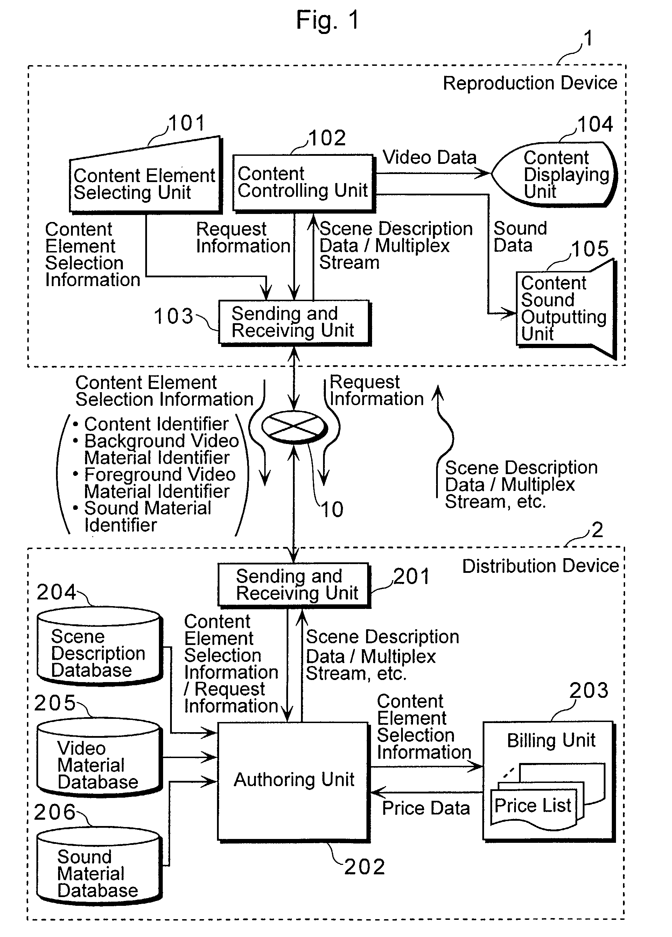

Fig. 1 is a functional block diagram showing a configuration of the content distribution and billing system according to the first embodiment for the present invention. This system is a communication system that performs a stream distribution of a content such as a video and a sound according to a user's diversified selections and requests and performs billing, including a reproduction device 1 and a distribution device 2 which are connected via a communication medium 10.

The reproduction device 1 is a personal computer, a mobile phone, a mobile information terminal, a digital broadcasting TV or the like for interacting with a user on a content selection and indicating to a user a content and price data which are distributed from the distribution device 2, including a content element selecting unit 101, a content controlling unit 102, a sending and receiving unit 103, a content displaying unit 104 and a content sound outputting unit 105 functionally.

The content element selecting unit 101 is a user interface that specifies a content of a user's desired element and structure via a dialogue with the user, and sends the content element selection information to the sending and receiving unit 103. The content controlling unit 102 decodes and reconstructs packet data of a content, etc. which is sent from the distribution device 2 via the communication medium 10 and the sending and receiving unit 103, and then outputs the obtained video data and the sound data to the content displaying unit 104 and the content sound outputting unit 105, respectively. The sending and receiving unit 103 is a sending and receiving circuit, driver software or the like for communicating with the distribution device 2 via the communication medium 10. The content displaying unit 104 is a display control circuit or the like including an LCD for displaying and reproducing video data, and the content sound outputting unit 105 is a sound control circuit or the like including a loud speaker for reproducing sound data as a sound.

The distribution device 2 is a distribution server including a computer or the like which constructs a content based on a user's selection and request which is sent from the reproduction device 1, performs a stream distribution of the content to the reproduction device 1, and sends the price information of the content, including a sending and receiving unit 201, an authoring unit 202, a billing unit 203, a scene description database 204, a video material database 205 and a sound material database 206.

The sending and receiving unit 201 is a sending and receiving circuit, driver software or the like for communicating with the reproduction device 1 via the communication medium 10. The authoring unit 202 constructs a content by reading out corresponding data from the databases 204∼206 based on content element selection information which is sent from the reproduction device 1 via the communication medium 10 and the sending and receiving unit 201, and outputs the content to the reproduction device 1 via the sending and receiving unit 201 and the communication medium 10. The billing unit 203 determines a price corresponding to the content element selection information which is notified from the authoring unit 202, and notifies the reproduction device 1 of the determination result as price data via the authoring unit 202 or the like. The scene description database 204, video material database 205 and sound material database 206 are hard disks or the like which store in advance scene description data, video material data and sound material data of all the contents which are to bedistributed, respectively.

The communication medium 10 is an interactive transmission path which connects the reproduction device 1 and the distribution device 2, and specifically a communication network such as the Internet, of which physical layer is a broadcasting/communication network such as a CATV, a telephone network, a data communication network, etc.

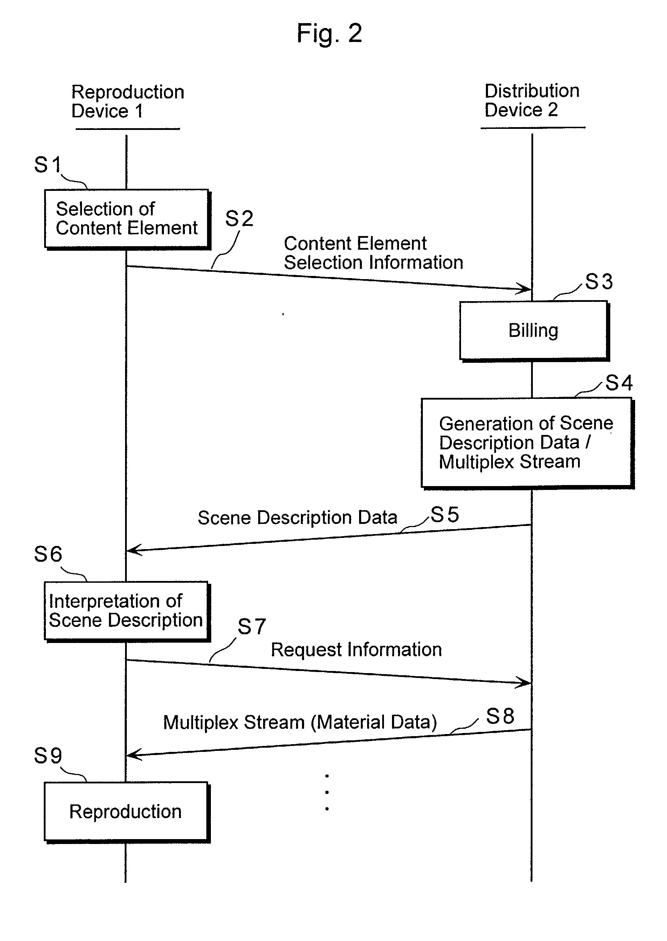

The following is an explanation of the operations of the content distribution and billing system of the first embodiment for the present invention that is configured as above, according to a sequence as shown in Fig. 2 (a flow of main processing of the present system).

The content element selecting unit 101 acquires a selection of a content work and a selection of a background video material, a foreground video material such as a person or a non-living thing and a sound material included in the content according to a user's instruction (Step S1 in Fig. 2). This content element selecting unit 101 does not have materials themselves such as actual videos and sounds in order to help a user select a content. Instead, the content element selecting unit 101 stores in advance still pictures and sample sounds, etc. indicating typical scenes of a video, displays them visually as a menu in a manner of distinguishing from each other by the names of these materials, and therefore acquires a user's selection instruction.

As a result of this selection processing, the content element selecting unit 101 generates content element selection information including a content identifier, a background video material identifier, a foreground video material identifier and a sound material identifier, and sends it to the sending and receiving unit 103. When there is a limit to a number of materials which can be selected depending upon a content work, materials of the number within the limit are selected.

Note that a foreground video material is a video material of a person or a non-living thing itself with the background thereof being deleted. It is generally called a video object in an arbitrary shape, and is defined by a pair of shape data (mask data) and video data. As a compression method of this kind of video object in an arbitrary shape, MPEG-4 (Moving Picture Experts Group 4) has been known.

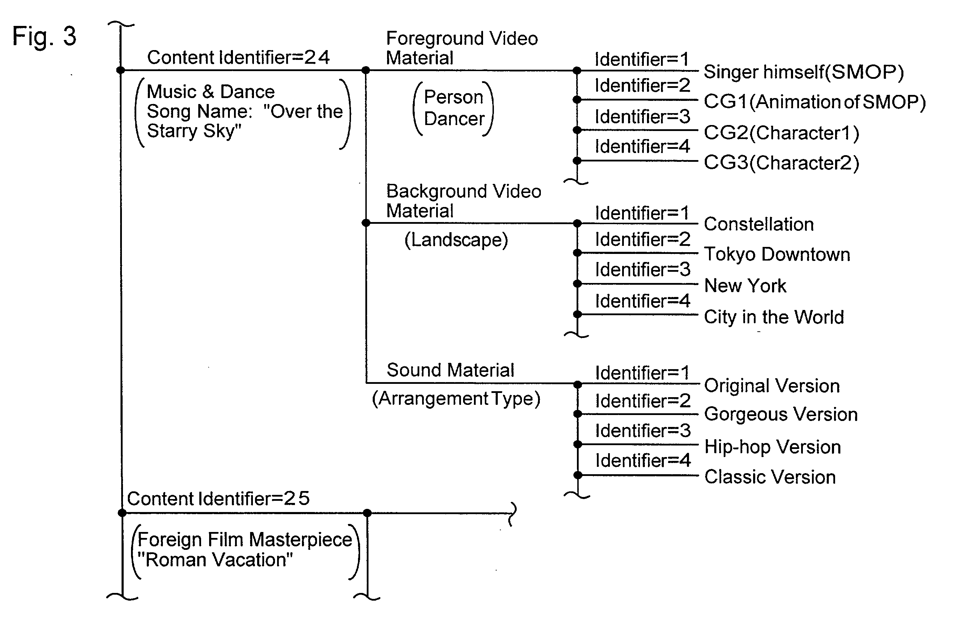

Fig. 3 is a tree showing an example of a content selection by the content element selecting unit 101. A user can select one of many contents (a content identifier = 24: music and dance in which various persons dance to a hit tune "Over the Starry Sky", for example) via a dialogue (such as viewing and listening to sample videos or sounds and selecting menu items) with the content element selecting unit 101, select one of a plurality of persons which are prepared for the "foreground" (a foreground video material identifier = 2: animation of a singing group "SMOP", for example), select one of a plurality of landscapes which are prepared for the "background" (a background video material identifier = 1: "constellation", for example), and then select one of a plurality of arrangement (or adaptation) types of music which are prepared for "sounds" (a sound material identifier = 2: "gorgeous version", for example).

The sending and receiving unit 103 sends the content element selection information generated in the content element selecting unit 101 to the sending and receiving unit 201 of the distribution device 2 via the communication medium 10 (Step S2 in Fig. 2). This transfer itself is performed in accordance with a well-known data transfer system which is determined depending upon the communication medium 10 (such as a use of the Internet protocol in a broadband transmission path).

The sending and receiving unit 201 sends the received content element selection information to the authoring unit 202. The authoring unit 202 sends the content element selection information to the billing unit 203.

The billing unit 203 having predetermined price lists 203a∼d for the selected content work (content identifier) and background video material, foreground video material and sound material (material identifiers) specifies the charging prices corresponding to the content identifier, background video material identifier, foreground video material identifier and sound material identifier of the content element selection information respectively by retrieving the price lists 203a∼d, calculates the total price by adding the specified charging prices, and generates price data (Step S3 in Fig. 2).

The generated price data is sent to the sending and receiving unit 103 of the reproduction device 1 via the authoring unit 202, the sending and receiving unit 201 and the communication medium 10, and displayed as the price information by the content controlling unit 102 or the content displaying unit 104. Or the price data is stored in the billing unit 203 per identification information of the reproduction device and used for charging to the user.

Separately from the above processing in the billing unit 203, the authoring unit 202 generates scene description data and material data which are to be distributed to the reproduction device 1 so as to be prepared for sending (Step S4 in Fig. 2). Specifically, the authoring unit 202 acquires from the scene description database 204 the scene description data corresponding to the content identifier of the content element selection information which is sent from the reproduction device 1. Here, the "scene description data" is so-called script description data including (A) a time and synchronous control description indicating when and how long each video material data or sound material data is repeatedly reproduced, (B) a video material stream identification description for specifying a video material, (C) a video material stream layout/scale description indicating in which position and how much scale the video material is displayed on the display screen, (D) a video material attribute description indicating a video material size, a data format and a compression format when the video material is compressed, (E) a video material layer description indicating in which layer each video material is displayed when the videos are displayed in layers (in other words, the drawing order of layered drawings), (F) a sound stream identification description for specifying a sound material, and (G) a sound stream attribute description indicating a data format of sound data and a compression format when the sound data is compressed.

Next, the authoring unit 202 acquires the background video material data and the foreground video material data corresponding to the background video material identifier and the foreground video material identifier of the content element selection information respectively from the video material database 205, and acquires the sound data corresponding to the sound material identifier from the sound material database 206. Note that the acquired background video material data, foreground video material data and sound material data are data files of a stream format.

Then, the authoring unit 202 describes (revises) the file names of the read-out files in the corresponding portions of the video material stream identification description and the sound stream identification description of the above-mentioned scene description data. Note that when one content includes a plurality of video/sound material data, the content element selecting unit 101 of the reproduction device 1 specifies to which portion of the scene description each material corresponds in an identifiable condition according to a user's selection, and make the information included in the content element selection information. Therefore, the authoring unit 202 reads out a plurality of material data from the video material database 205 and the sound material database 206 by referring to such information included in the content element selection information, and registers the file names of these data in the corresponding portions of the scene description.

Furthermore, the authoring unit 202 packetizes the read-out and revised scene description data, and sends them to the reproduction device 1 via the sending and receiving unit 201 and the communication medium 10 (Step S5 in Fig. 2).

Note that the authoring unit 202 also packetizes the video and sound material data as a multiplex stream, and distributes them in a stream to the reproduction device 1 via the sending and receiving unit 201 and the communication medium 10 in synchronization with the reproduction device 1 (after waiting for the after-mentioned request information to be sent from the reproduction device 1) (Step S8 in Fig. 2).

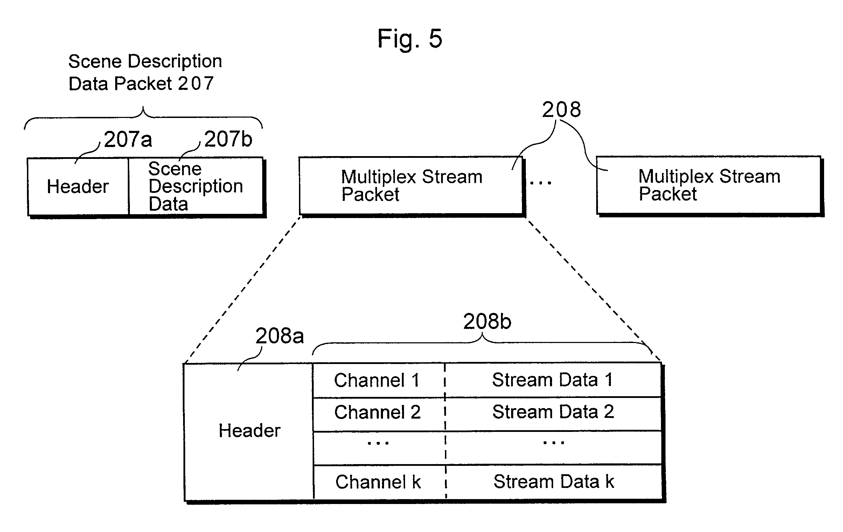

Fig. 5 shows a data structure of a scene description data packet and a multiplex stream packet which are generated by the authoring unit 202.

The scene description data is packetized as a scene description data packet 207. The scene description data packet 207 includes a header 207a including an identifier indicating that it is scene description data and a body 207b including the scene description data itself. When the scene description data is too large for one packet, it is transferred in plurality of packets. In that case, an identifier indicating a plurality of packets and an order number are described in the header 207a.

On the other hand, the material data is packetized as a tranin of multiplex stream packets 208. The multiplex stream packet 208 includes a header 208a and a body 208b. The header 208a includes an identifier indicating that this packet 208 is a multiplex stream packet, a total number of channels (k) included in the body 208b and data information of each channel (such as a file name of a stream, a material identifier, a stream length, a compression format, a time offset of data, a frame rate at the time of reproduction). The body 208b includes a plurality of stream data, in which each material data itself is allocated to each channel. This is defined in a form of a two-dimensional array of a channel number and a time (a frame number). Also, when there are a plurality of multiplex stream packets 208 (there are usually a plurality of them), packet numbers are included in the header 208a in the order of reproduction start time.

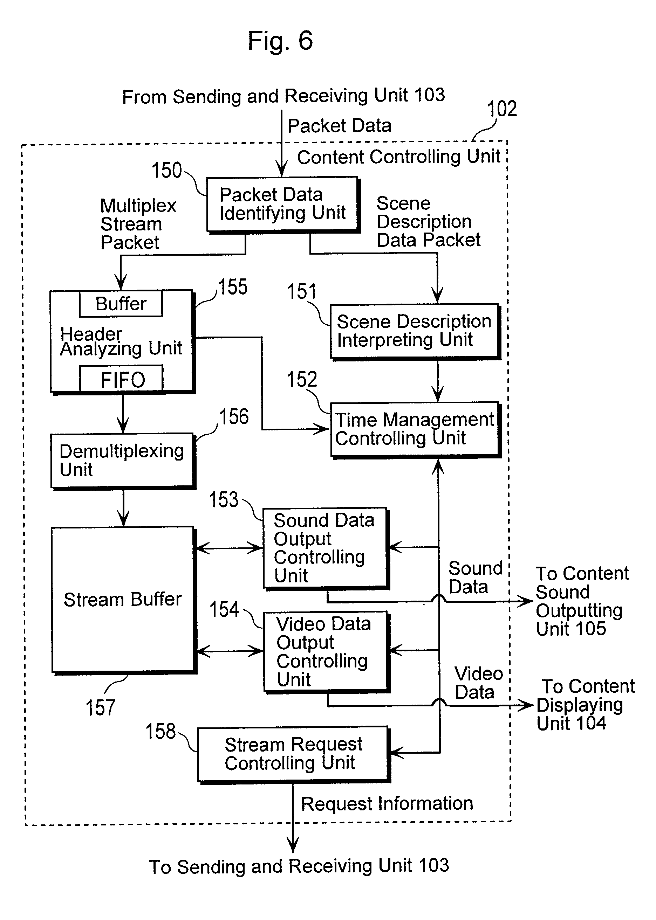

Fig. 6 is a functional block diagram showing a detailed configuration of the content controlling unit 102. The content controlling unit 102 roughly includes an input processing unit (a packet data identifying unit 150), processing units for a multiplex stream packet (a header analyzing unit 155, a demultiplexing unit 156 and a stream buffer 157), processing units for a scene description data packet (a scene description interpreting unit 151 and a time management controlling unit 152) and processing units for reproduction output and synchronization (a sound data output controlling unit 153, a video data output controlling unit 154 and a stream request controlling unit 158).

The packet data identifying unit 150 receives packet data which is transferred from the sending and receiving unit 103, decides that the packet is either the scene description data packet 207 or the multiplex stream packet 208 based on the identifier included in the header, and as a result, transfers the packet data to the scene description interpreting unit 151 when it is the scene description data packet 207 and to the header analyzing unit 155 when it is the multiplex stream packet 208.

As for a content distribution, scene description data is first distributed and then a multiplex stream is distributed, as mentioned above. So, operations at the time when the scene description data packet 207 is sent will be explained first.

The scene description interpreting unit 151 decodes details of the scene description data packet 207 which is transferred from the packet data identifying unit 150 (Step S6 in Fig. 2). Specifically, the scene description interpreting unit 151 sorts a video material and a sound material, specifies per material a material identifier (such as a video material identifier or a sound material identifier), a reproduction start time, a reproduction end time, a reproduction period, a compression method when the material is compressed, and a reproduction position and a layer on a display device when it is a video material, and sends the information as material information organized per material to the time management controlling unit 152.

The time management controlling unit 152 sorts and organizes each material according to the reproduction start time based on the material information which is sent from the time management controlling unit 152, performs a time management (such as a control of a reproduction start and end) and a synchronization management (such as a control for synchronizing a reproduction timing between each material) of content reproduction, and gives a read-in notice and a reproduction control notice of the material data required for reproduction to the sound data output controlling unit 153 in the case of sound material data and to the video data output controlling unit 154 in the case of video material data, respectively. Note that since the multiplex stream packet 208 has not yet been sent when the content reproduction starts, the time management controlling unit 152 gives a sending notice to request the stream request controlling unit 158 to send material data required for the content reproduction start and notifies it of a material identifier of the required material, without giving a notice to the sound data output controlling unit 153 and the video data output controlling unit 154.

The stream request controlling unit 158 generates request information which includes the organized material identifiers requested to be sent by the time management controlling unit 152, and sends the request information to the distribution device 2 via the sending and receiving unit 103 and the communication medium 10 (Step S7 in Fig. 2). The request information which is sent is transferred to the authoring unit 202 via the sending and receiving unit 201. The authoring unit 202 converts the material data indicated by the request information into the multiplex stream packet 208 and sends it to the reproduction device 1 via the sending and receiving unit 201 and the communication medium 10, as mentioned above (Step S8 in Fig. 2). The multiplex stream packet 208 which is sent is transferred to the content controlling unit 102 via the sending and receiving unit 103. Note that there are usually a plurality of multiplex stream packets for the request information, and these packets are sequentially generated and sequentially sent.

Next, operations of the content controlling unit 102 at the time when the multiplex stream packet 208 is sent will be explained.

The packet data identifying unit 150 identifies the multiplex stream packet 208, and then sends it to the header analyzing unit 155.

The header analyzing unit 155 having an input buffer once holds in the buffer the multiplex stream packets 208 which are sequentially sent, checks the packet numbers of the headers 208a in the order that they are sent and sorts them in numerical order, sends them to an output buffer of a FIFO (first in, first out) type, and sends data information of each channel to the time management controlling unit 152.

The demultiplexing unit 156 reads out the multiplex stream packets 208 from the FIFO type output buffer included in the header analyzing unit 155, and separates stream data of each channel and sends to the stream buffer 157.

The stream buffer 157 is configured so as to hold stream data for each channel as well as to read it out from the sound data output controlling unit 153 and the video data output controlling unit 154 (that is, the stream buffer 157 has two output ports so as to read out concurrently), as shown in Fig. 6.

On the other hand, as for the data which is to be read out from the stream buffer 157, the time management controlling unit 152 sends an instruction, based on the header information of each channel which is sent from the header analyzing unit 155, to the sound data output controlling unit 153 in the case of sound material data and to the video data output controlling unit 154 in the case of video material data, respectively. Note that when the data is video material data, the time management controlling unit 152 also gives an instruction of the screen layout and layer at the same time.

The sound data output controlling unit 153 confirms whether or not there is the sound material data which is notified from the time management controlling unit 152 in the stream buffer 157, notifies the time management controlling unit 152 that there is no sound material data there when there is no data, and notifies the time management controlling unit 152 of the channel number and packet number of the stream data which is now being read out when there is the sound material data. At the same time, the sound data output controlling unit 153 sends the read-out sound material data to the content sound outputting unit 105 to have it reproduce the sound (Step S9 in Fig. 2). Note that when the sound material data is compressed, it is expanded in the sound data output controlling unit 153, and the expanded data is sent to the content sound outputting unit 105.

Likewise, the video data output controlling unit 154 confirms whether or not there is the video material data which is notified from the time management controlling unit 152 in the stream buffer 157, notifies the time management controlling unit 152 that there is no sound material data there when there is no data, and notifies the time management controlling unit 152 of the channel number and packet number of the stream data which is now being read out when there is the video material data. At the same time, the video data output controlling unit 154 sends the read-out video material data to the content displaying unit 104 according to the screen layout and layer which are notified from the time management controlling unit 152 so that the videos are displayed in the indicated screen positions in the order from the backward layer, and has the content displaying unit 104 reproduce the videos (Step S9 in Fig. 2).

Note that the content displaying unit 104 usually has a frame memory, and the address of the frame memory corresponds to the screen position one to one. In this case, the video data output controlling unit 154 writes the video material data sequentially in the order from the backward layer to a storage area in the address of the frame memory of the content displaying unit 104 which corresponds to the indicated screen position. After completing writing for one frame display, the content displaying unit 104 displays the video on the display screen such as a CRT, liquid crystal or plasma display. Note that when the video material data is compressed, it is expanded in the video data output controlling unit 154, and the expanded data is sent to the content displaying unit 104.

When the sound data output control unit 153 or the video data output controlling unit 154 notifies that "there is no material data", or when there is material data which is not being reproduced now but needs to be reproduced within a predetermined time as a result of monitoring the time management status of reproduction start time, the time management controlling unit 152 notifies the stream request controlling unit 158 of the material information to request it to send the necessary material data.

When the stream request controlling unit 158 receives the notice, it repeats the above-mentioned processing (Steps S7∼S9 in Fig. 2), and thereby continues the reproduction processing by repeating the distribution of the necessary sound data and video data.

Note that as for the last material in reproducing a content, an identifier indicating the reproduction end (an end identifier) as well as the material information are sent from the time management controlling unit 152 to the stream request controlling unit 158. The end identifier which is sent from the stream request controlling unit 158 to the distribution device 2 according to the above-mentioned procedure is recognized by the authoring unit 202, and the distribution of the content is completed at the time when the sending of the multiplex stream packet 208 of the last material is completed.

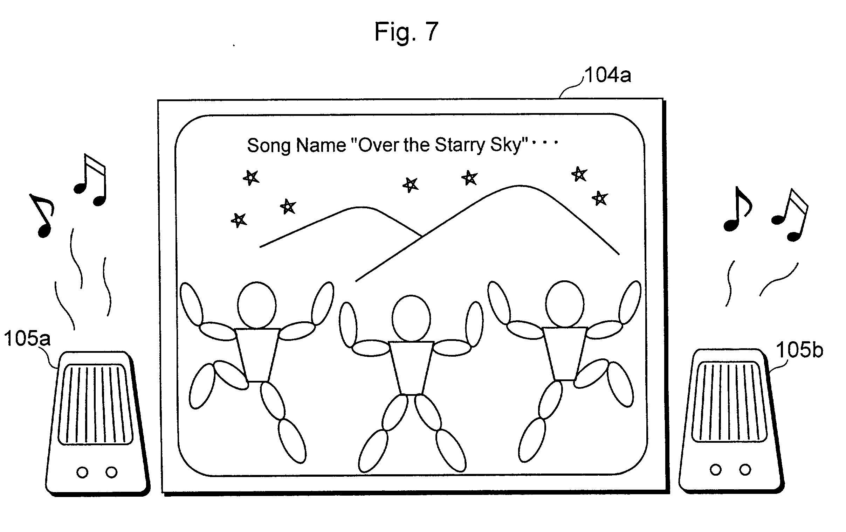

Fig. 7 shows how it looks like when the sound data and video data which are distributed according to the above-mentioned communication procedure are reproduced in the reproduction device 1. In this example, a song named "Over the Starry Sky" which is arranged for a "gorgeous version" by an orchestral performance is played from the loud speakers 105a, 105b of the content sound outputting unit 105, and an animated persons which are assimilated to a singing group "SMOP" are dancing to the song with a background "constellation" on the display screen 104a of the content displaying unit 104. This kind of a music arrangement method and a combination of the foreground (dancing by animated persons) and the background (landscape) are specified in advance by a user's selection.

As mentioned above, according to this embodiment for the present invention, a user can select not only one object but also individual elements (a performance type of music, and a background and a foreground of a video) included in the selected content to his/her taste when he/she views and listens to the content. In other words, a user can enjoy viewing and listening to a content of which details are arranged by himself/herself and a layout is developed to his/her wish. As a result, the user can find satisfaction as if he/she viewed and listened to his/her own original content, not just receives a standard content unilaterally.

Also, since the charging price of the content is calculated based on individual elements which the user selects, the user's intention is reflected in detail and therefore the user can be satisfied with the price system, differently from the conventional price system in which the price is determined uniformly for the applicable content.

Although, in the present embodiment, one or more background videos and one or more foreground videos are displayed on the entire screen, as shown in Fig. 7, a plurality of rectangular windows showing video streams may be displayed on one screen. That is, by defining correspondence between individual foreground videos and rectangular windows showing video streams which are displayed independently of the screen, a user can view and listen to a plurality of video streams corresponding to a plurality of foreground videos selected by the user on the same screen.

### (The second embodiment)

Next, a content distribution and billing system according to the second embodiment for the present invention will be explained below with reference to figures.

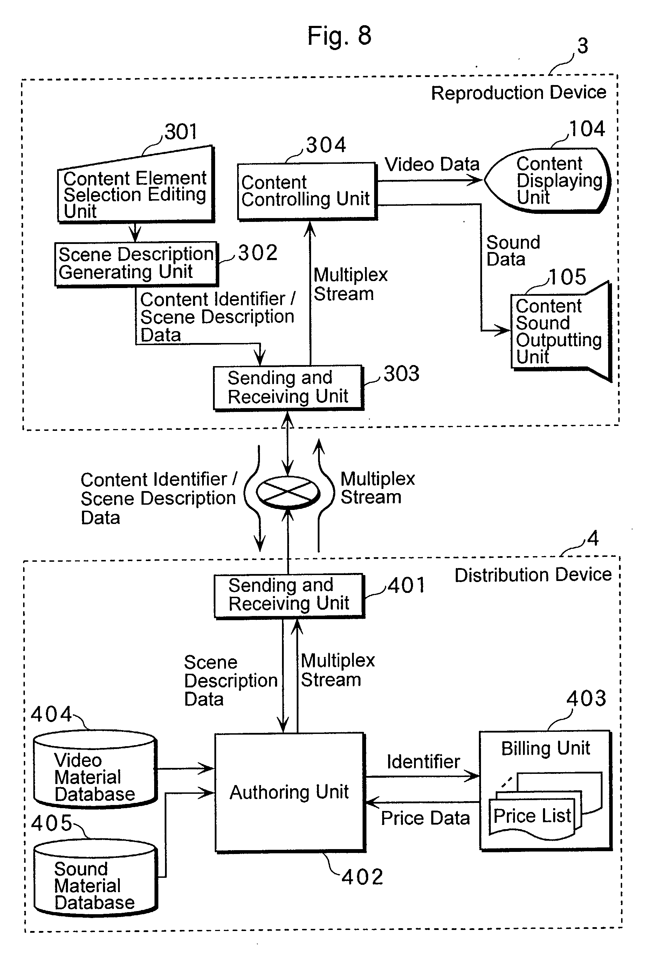

Fig. 8 is a functional block diagram showing a configuration of the content distribution and billing system according to the second embodiment for the present invention. This system includes a reproduction device 3 and a distribution device 4 which are connected to each other via the communication medium 10, and is common to the system of the first embodiment in that it performs both a stream distribution of a content such as a video and a sound according to a user's detailed selections or requests as well as billing processing. But it is different from the system of the first embodiment in that a user can edit a scene description in more detail and therefore scene description data is generated in the reproduction device 3, not in the distribution device 4. The system of the second embodiment will be explained below with emphasis on the different points from that of the first embodiment.

The reproduction device 3, which is a personal computer or the like that dialogues with a user about a content selection (an editing of a scene description in the second embodiment) or indicates contents and a price data which are distributed from the distribution device 4 to the user, functionally includes a content element selection editing unit 301, a scene description generating unit 302, a sending and receiving unit 303, a content controlling unit 304, a content displaying unit 104 and a content sound outputting unit 105. Note that the same numbers are assigned to the components with the same functions as those of the first embodiment, and explanation of those components will be omitted (hereinafter the same applied to other figures).

The content element selection editing unit 301 is a graphical user interface which supports a user's content selection and editing based on a dialogue with the user. The scene description generating unit 302 generates results of editing by the content element selection editing unit 301 as a content identifier and scene description data, and sends them to the sending and receiving unit 303. The sending and receiving unit 303 is a sending and receiving circuit, a driver software or the like for communicating with the distribution device 4 via the communication medium 10. The content controlling unit 304 decodes and reconstructs a multiplex stream packet (material data) which is sent from the distribution device 4 via the communication medium 10 and the sending and receiving unit 103, and outputs the acquired video data and sound data to the content displaying unit 104 and the content sound outputting unit 105, respectively.

The distribution device 4, which is a distribution server including a computer or the like that generates a multiplex stream packet based on the content identifier and scene description data which are sent from the reproduction device 3, performs its stream distribution to the reproduction device 3, and sends the price information, functionally includes a sending and receiving unit 401, an authoring unit 402, a billing unit 403, a video material database 404 and a sound material database 405.

The sending and receiving unit 401 is a sending and receiving circuit, a driver software or the like for communicating with the reproduction device 3 via the communication medium 10. The authoring unit 402 reads out corresponding material data from the material databases 404, 405 based on the content identifiers and scene description data which are sent from the reproduction device 3 via the communication medium 10 and the sending and receiving unit 401 so as to generate a multiplex stream packet (material data), and outputs it to the reproduction device 3 via the sending and receiving unit 401 and the communication medium 10. The billing unit 403 determines the prices corresponding to various identifiers which are notified by the authoring unit 402, and notifies the reproduction device 3 of the determination results as the price data via the authoring unit 402. The video material database 404 and the sound material database 405 are respectively hard disks or the like that store in advance video material data and sound material data of all contents subject to distribution.

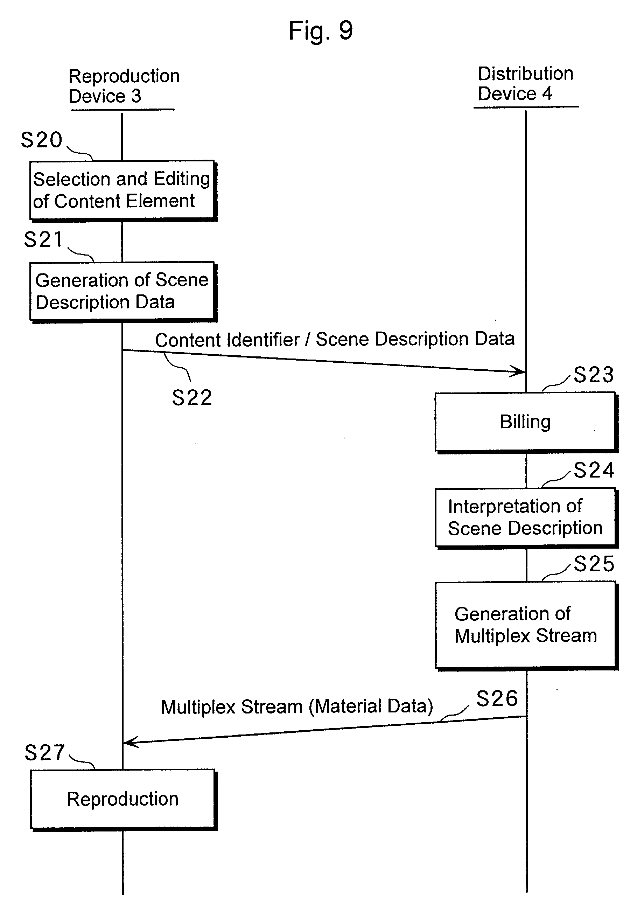

Operations of the content distribution and billing system according to the second embodiment for the present invention as configured as above will be explained below according to a sequence (a flow of the main processing of the present system) as shown in Fig. 9.

The content element selection editing unit 301 acquires selections of a content work, and a background video material, a foreground video material such as a person or non-living thing, and a sound material included in the content according to a user's instruction, and acquires specifications of the screen layout and reproduction start time of these materials (Step S20 in Fig. 9).

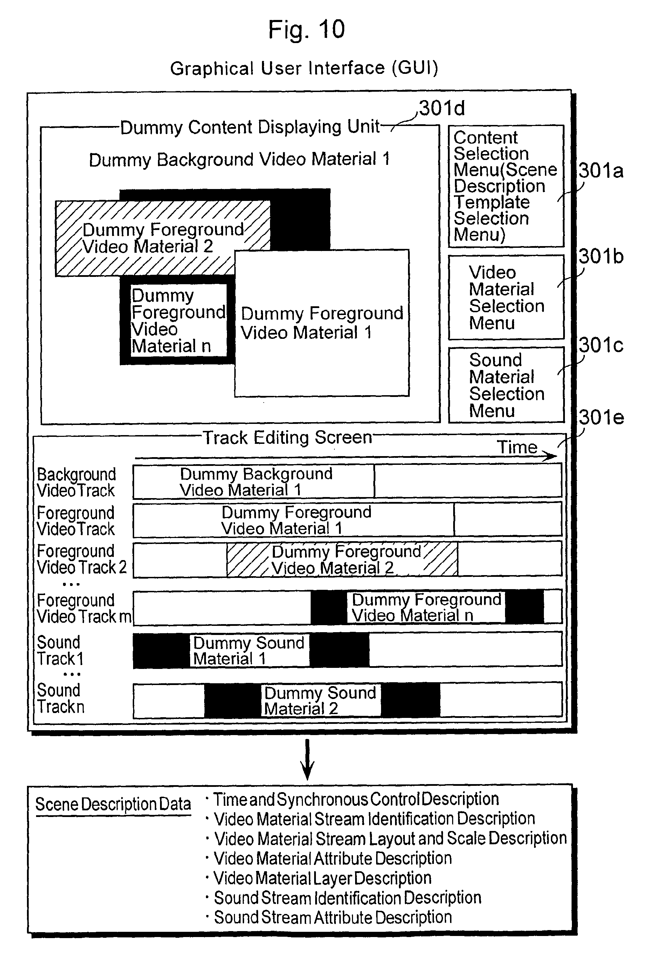

Fig. 10 is an example of a graphical user interface which the content element selection editing unit 301 provides. In this figure, a user first selects a desired content among a content selection menu 301a on the upper right. The user's selection specifies the template of the content on which the corresponding screen layout and reproduction start time are described.

Next, since a list of plurality of video materials which are to be determined corresponding to the selected content is displayed in the video material selection menu 301b, the user selects a background material and a foreground material among the displayed list. Similarly, since a list of plurality of sound materials which are to be determined corresponding to the selected content is displayed in the sound material selection menu 301c, the user selects a sound material among the displayed list.

The selected video material (template) is displayed on a dummy content displaying unit 301d as a virtual video material (a simple video object such as an outline video) corresponding to the selected video material. At the same time, it is displayed on a track editing screen 301e as a video track indicating a video display time and period for reproduction of the whole content. Note that the descending display order of the video tracks in the track editing screen 301e corresponds to that of the layers in the display screen, that is, the top video track corresponds to the backmost layer on the video screen. As for the sound material, the selected sound material (template) is displayed as a sound track on the track editing screen 301e, and the sound output time and period for reproduction of the whole content can be recognized. A rectangle marked between a start time and an end time of the material is displayed on the track, and the corresponding material name is displayed within the rectangle.

The user retouches the content which is displayed as a template via a dialogue with (a selection operation in) the content element selection editing unit 301. That is, the user edits a screen layout by moving a virtual video material displayed on the dummy content displaying unit 301d, moves a reproduction start time by moving a rectangle of a video track or a sound track on the track editing screen 301e, or changes a reproduction period by changing a scale of a rectangle. As a result, the user can work out his/her own original content by editing the template.

When the operations are completed in the content element selection editing unit 301, it is notified to the scene description generating unit 302 that they are completed, and the scene description generating unit 302 converts the editing results in the content element selection editing unit 301 into scene description data (Step S21 in Fig. 9). As a result of this conversion, as for each video material in the graphical user interface in Fig. 10, a display position such as a screen layout in the dummy content displaying unit 301d is defined according to a relative position from the upper left corner, for example, a layer is defined according to the order of the video tracks in the track editing screen 301e, a reproduction start time and end time are defined according to a position of a rectangle indicating the reproduction start time and period of the video material in the track, and a reproduction period is defined according to a length of the lower side of the rectangle (the difference between the start time and the end time). Likewise, as for each sound material, a reproduction start time, end time and a reproduction period are defined based on the settings of the sound track displayed on the track editing screen 301e. These are described in a predetermined format as scene description data. Note that the selected background video material, foreground video material or sound material is described in the scene description data in a form of a material identifier.

As mentioned above, the scene description data generated in the scene description generating unit 302 is sent to the sending and receiving unit 401 of the distribution device 4 along with the content identifier indicating the selected content via the sending and receiving unit 303 and the communication medium 10 (Step S22 in Fig. 9). The sending and receiving unit 401 sends the sent content identifier and scene description data to the authoring unit 402.

The authoring unit 402 sends the content identifier, the material identifiers of the background video material, foreground video material and sound material which are described in the scene description data to the billing unit 403. The billing unit 403 calculates the charging prices in the same manner as the first embodiment, and generates the price calculation data (Step S23 in Fig. 9).

The authoring unit 402 analyzes the details of the scene description which is sent from the sending and receiving unit 401, and organize the reproduction start time, end time and reproduction period of the material data defined in each description, the compression method when the material data is compressed, and further the reproduction position and layer in the display device when the data is a video material as stream information for each material (Step S24 in Fig. 9).

Next, the authoring unit 402 reads out the video material data from the video material database 404 and the sound material data from the sound material database 405 in the order of earlier reproduction start time, and generates the multiplex stream packet 208 according to the schedule based on the reproduction period described in the scene description data (Step S25 in Fig. 9). At this time, the header 208a of the multiplex stream packet 208 is made up from the stream information corresponding to each material, and the body 208b is generated by storing the read-out material data in a data area of each channel in a stream data format.

Note that the authoring unit 402 has the header hold packet numbers corresponding to the reproduction order because there are usually a plurality of multiplex stream packets 208. The multiplex stream packets 208 generated in the authoring unit 402 are sequentially sent to the sending and receiving unit 303 of the reproduction device 3 via the sending and receiving unit 401 and the communication medium 10 (Step S26 in Fig. 9). The last identifier is added to the header 208a of the last multiplex stream packet 208.

In the reproduction device 3, the multiplex stream packet 208 which is sent from the distribution device 4 is transferred to the content controlling unit 304 via the sending and receiving unit 303.

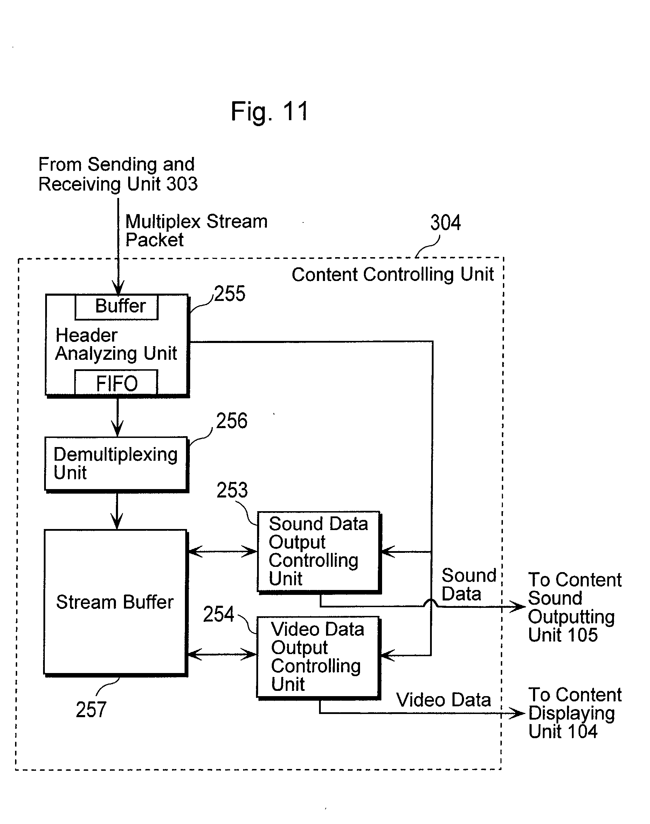

Fig. 11 is a functional block diagram showing a detailed configuration of the content controlling unit 304, and corresponds to Fig. 6 of the first embodiment. The content controlling unit 304 includes processing units for the multiplex stream packet (a header analyzing unit 255, a demultiplexing unit 256 and a stream buffer 257) and processing units for reproduction output (a sound data output controlling unit 253 and an video data output controlling unit 254). Note that, differently from the first embodiment, the scene description data is generated in the reproduction device 3 and the distribution control of multiplex stream (control initiative) is under the distribution device 4 according to this embodiment, and therefore, the content controlling unit 304 does not have components corresponding to the input processing unit (the packet data identifying unit 150), the processing units for the scene description data packet (the scene description interpreting unit 151 and the time management controlling unit 152) and the processing unit on reproduction synchronization (the stream request controlling unit 158) included in the content controlling unit 102 of the first embodiment.

The header analyzing unit 255 has a buffer, and the multiplex stream packets 208 which are sequentially sent are once held in the buffer. Then, the header analyzing unit 255 checks the packet numbers of the headers of the packets in the order of sending, sorts them in the numerical order, and sends them to a FIFO-type output buffer. Thereby, the time management and synchronization control of a content reproduction are performed. On the other hand, as for the material data which is to be read out from the stream buffer, based on the stream information of each channel of the header, the header analyzing unit 255 instructs the sound data output controlling unit 253 and the video data output controlling unit 254 to read out the sound material data and the video material data, respectively, and at the same time, it instructs the video data output controlling unit 254 to control reproduction regarding the screen layout and layer when the data is the video material data. Note that when the last multiplex stream packet 208 is sent, the header analyzing unit 255 determines the end based on the end identifier of the header, and completes the reproduction processing of the content after the following processing is completed.

The demultiplexing unit 256 reads out the multiplex stream packet 208 from the FIFO-type buffer at the backside of the header analyzing unit 255, separates the data stream per channel, and sends it to the stream buffer 257. The stream buffer 257 holds the stream per channel, and has a configuration which makes it possible to read out the data from the sound data output controlling unit 253 and the video data output controlling unit 254, as shown in Fig. 11.

The sound data output controlling unit 253 reads out to the stream buffer 257 the sound material data which is notified from the header analyzing unit 255, sends the sound material data to the content sound outputting unit 105 so as to have it reproduce the sound (Step S27 in Fig. 9). Note that when the sound material data is compressed, it is expanded in the sound data output controlling unit 253, and the expanded data is sent to the content sound outputting unit 105.

Similarly, the video data output controlling unit 254 reads out the video material data which is notified from the header analyzing unit 255, sends the video material data to the indicated screen position of the content displaying unit 104 in the order of the backward layer according to the screen layout and layer instructed by the header analyzing unit 255 so as to have the content displaying unit 104 reproduce and display the video (Step S27 in Fig. 9). The content which a user selects and edits is distributed in a stream and reproduced in the content displaying unit 104 and the content sound outputting unit 105 in this way.

As mentioned above, according to the second embodiment, when a user views and listens to a content, he/she selects not only an object, but also a template of a scene description via a graphical user interface, edits a layout and layer or a reproduction timing of each video material and a reproduction timing of a sound material, and thus customizes the content to his/her taste. Therefore, the user can receive the distribution of the content closer to his/her taste than that in the first embodiment.

Accordingly, when a rectangular window showing a video stream which is independent per foreground video is displayed on a screen, a user can view and listen to a plurality of rectangular windows showing video streams on the same screen by selecting a plurality of foreground video materials to his/her taste.

### (The third embodiment)

Next, a content distribution and billing system according to the third embodiment for the present invention will be explained with reference to figurers.

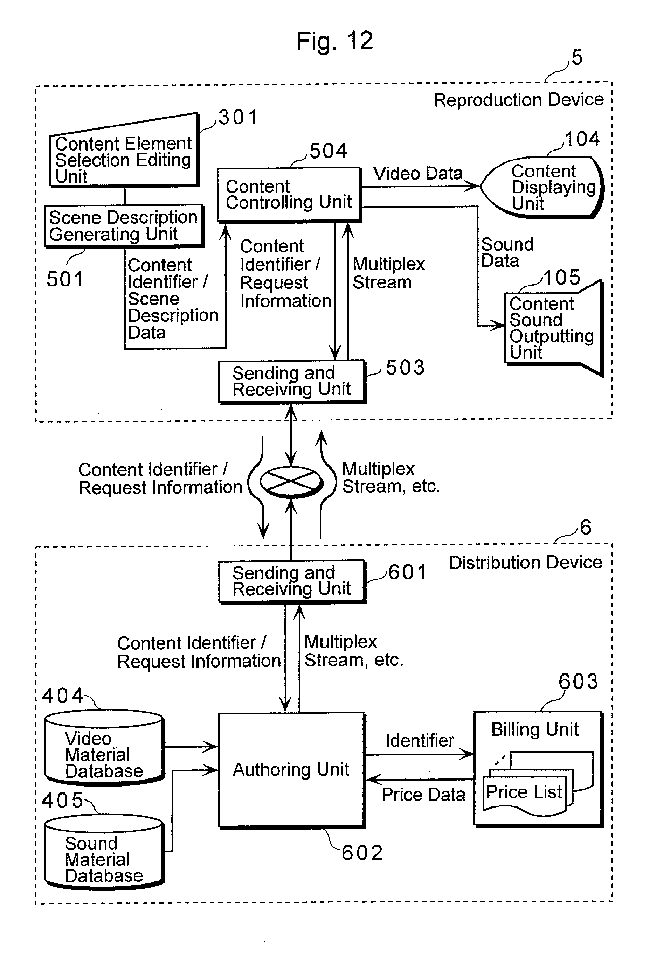

Fig. 12 is a functional block diagram showing a configuration of a content distribution and billing system according to the third embodiment for the present invention. This system includes a reproduction device 5 and a distribution device 6 which are connected to each other via the communication medium 10. This system has the basic functions which are common to those of the systems of the first and the second embodiments, but has a mixed type of configuration incorporating parts of these systems of the first and the second embodiments, respectively. In other words, this system is common to that of the second embodiment in that scene description data is generated not by the distribution device 6 but by the reproduction device 5, and common to that of the first embodiment in that the generated scene description data is analyzed (that is, distribution of multiplex stream is controlled) not by the distribution device 6 but by the reproduction device 5.

The reproduction device 5 is a personal computer or the like which dialogues with a user regarding a content selection (en editing of a scene description in this embodiment) or shows contents and price data which are distributed from the distribution device 6 to the user, and functionally includes a content element selection editing unit 301, a scene description generating unit 501, a sending and receiving unit 503, a content controlling unit 504, a content displaying unit 104 and a content sound outputting unit 105. Note that the same numbers are assigned to the components with the same functions as those of the first and second embodiments, and explanation of those components will be omitted (hereinafter the same applied to other figures).

The content element selection editing unit 301 is same as that of the second embodiment. The scene description generating unit 501 generates the results of editing by the content element selection editing unit 301 as a content identifier and scene description data, and sends them to the content controlling unit 504. The sending and receiving unit 503 is a sending and receiving circuit or a driver software for communicating with the distribution device 6 via the communication medium 10. The content controlling unit 504 sends request information and others to the distribution device 6 based on the content identifier and the scene description data which are sent from the scene description generating unit 501, then decodes and reconstructs the multiplex stream packet (material data) which is distributed from the distribution device 6, and outputs the obtained video data and sound data to the content displaying unit 104 and the content sound outputting unit 105, respectively.

The distribution device 6 is a distribution server including a computer or the like which generates the multiplex stream packet based on the information (content identifier and request information) which is sent from the reproduction device 5, performs its stream distribution to the reproduction device 5, and sends the price information, and functionally includes a sending and receiving unit 601, an authoring unit 602, a billing unit 603, a video material database 404 and a sound material database 405.

The sending and receiving unit 601 is a sending and receiving circuit, driver software or the like for communicating with the reproduction device 5 via the communication medium 10. The authoring unit 602 reads out the corresponding material data from the material databases 404, 405 based on the content identifier and request information which are sent from the reproduction device 5 via the communication medium 10 and the sending and receiving unit 601 and generates the multiplex stream packet (material data), and outputs it to the reproduction device 5 via the sending and receiving unit 601 and the communication medium 10. The billing unit 603 determines the prices corresponding to various identifiers which are notified from the authoring unit 602, and notifies the reproduction device 5 via the authoring unit 602 of the determination result as the price data. The video material database 404 and the sound material database 405 are same as those in the second embodiment.

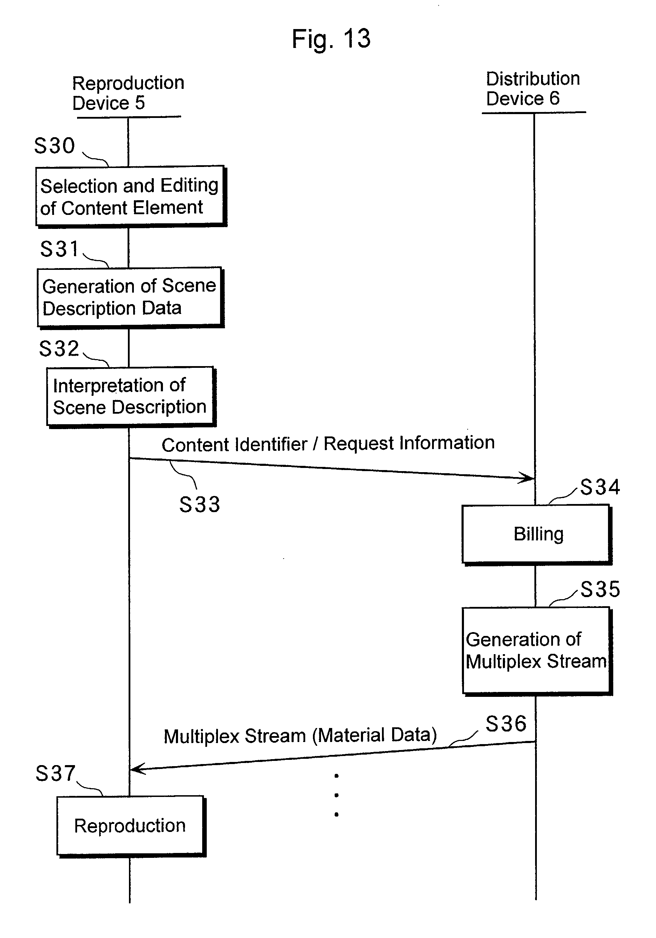

Operations of the content distribution and billing system according to the third embodiment for the present invention as configured as above will be explained below in accordance with a sequence (a flow of the main processing of the system) as shown in Fig. 13.

The content element selection editing unit 301 acquires a selection or an editing instruction regarding details of a content from a user in the same manner as the second embodiment (Step S30 in Fig. 13).

When the user completes the editing operation of the content, the completion is notified to the scene description generating unit 501, and the scene description generating unit 501 converts and generates the scene description data based on the editing result in the content element selection editing unit 301 in the same manner as the second embodiment (Step S31 in Fig. 13). The scene description data which is generated in the scene description generating unit 501 is sent to the content controlling unit 504 along with the content identifier describing the selected content.

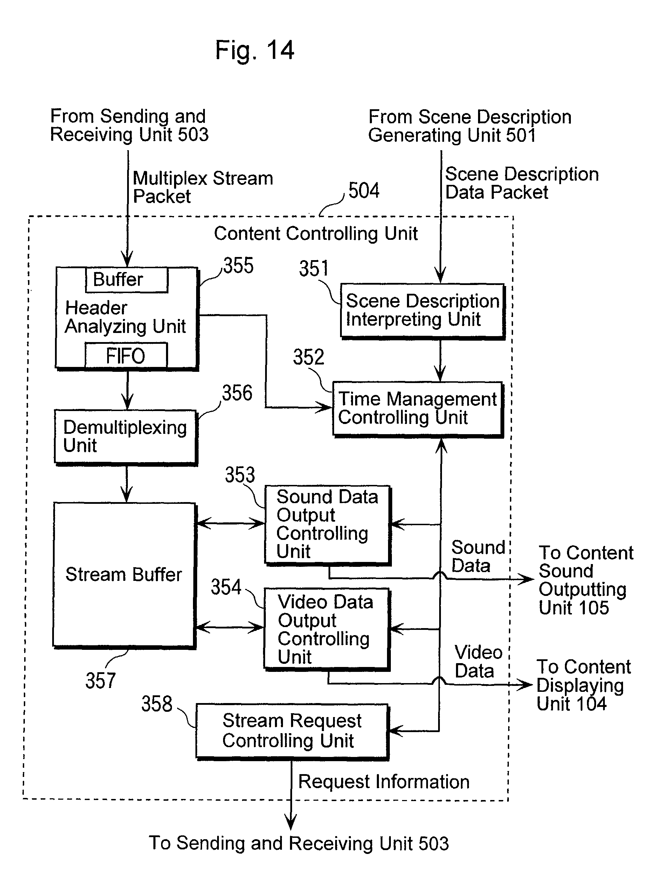

Fig. 14 is a functional block diagram showing a detailed configuration of the content controlling unit 504, and corresponds to Fig. 6 of the first embodiment. The content controlling unit 504 roughly includes processing units for multiplex stream packets (a header analyzing unit 355, a demultiplexing unit 356 and a stream buffer 357), processing units for scene description data packets (a scene description interpreting unit 351 and a time management controlling unit 352) and processing units for a reproduction output and synchronization (a sound data output controlling unit 353, a video data output controlling unit 354 and a stream request controlling unit 358), and corresponds to the content controlling unit 102 without the packet data identifying unit 150 of the first embodiment.

The scene description data and content identifier which are sent from the scene description generating unit 501 are transferred to the scene description interpreting unit 351. The scene description interpreting unit 351 interprets the scene description data (Step S32 in Fig. 13). That is, the scene description interpreting unit 351 sends to the time management controlling unit 35 material information organized per material including a classification of a video material and a sound material and the material identifiers (a video material identifier and a sound material identifier), a reproduction start time, end time and a reproduction period of each material, a compression method when the material is compressed, and the reproduction position and layer on the display device when the material is a video material along with the content identifier.

The time management controlling unit 352 sorts and organizes each material from the material information based on its reproduction start time, and gives the sound data output controlling unit 353 and the video data output controlling unit 354, respectively, a reading notice of the material data, that is, the sound material data and the video material data, necessary for time management and synchronization management of the content reproduction and the reproduction itself. When the reproduction of the content is started, the time management controlling unit 352 first gives the stream request controlling unit 358 a sending notice of the content, and then transfers the material identifier of the material necessary for the content reproduction start and the content identifier.

The stream request controlling unit 358 generates request information which is the organized material identifiers which are sent from the time management controlling unit 352, sends the request information and content identifier to the sending and receiving unit 601 of the distribution device 6 via the sending and receiving unit 503 and the communication medium 10 (Step S33 in Fig. 13).

The sent request information and content identifier are transferred from the sending and receiving unit 601 to the authoring unit 602. The authoring unit 602 sends the content identifier and the material identifier of the request information to the billing unit 603. The billing unit 603, having in advance predetermined price lists for each of the selected content work (content identifier), background video material, foreground video material and sound material (the material identifiers), calculates the charging price by retrieving the price lists by the content identifier, background video material identifier, foreground video material identifier and sound material identifier, and adding up the prices retrieved from the price lists as charging prices until the last material necessary for the content reproduction is sent, and generates the price data (Step S34 in Fig. 13). When the billing unit 603 receives the notice from the authoring unit 602 that the sending of the last material is completed, the calculated price data is sent to the sending and receiving unit 503 of the reproduction device 5 via the sending and receiving unit 601 and the communication medium 10, and the price information is indicated by the content controlling unit 504 and the content displaying unit 104.

The authoring unit 602 reads out the video material data from the video material database 404 and the sound material data from the sound material database 405, respectively, according to the material identifiers of the request information, and generates the multiplex stream packet 208 (Step S35 in Fig. 13). The header 208a is generated in the same manner as the first embodiment. Note that there are usually a plurality of multiplex stream packets 208, and the packet numbers corresponding to the reproduction order are held in the headers. The generated multiplex stream packets 208 are sequentially sent to the sending and receiving unit 503 of the reproduction device 5 via the sending and receiving 601 and the communication medium 10 (Step S36 in Fig. 13). The last identifier is added to the header 208a of the last multiplex stream packet 208. Also, when the last multiplex stream packet 208 is sent, it is notified to the billing unit 603.

The multiplex stream packet 208 which is sent to the sending and receiving unit 503 is transferred to the content controlling unit 504.

The header analyzing unit 355 of the content controlling unit 504 has a buffer which once holds the multiplex stream packets 208 which are sequentially sent, checks the packet numbers of the headers in the sending order and sorts them in the numerical order, sends them to the FIFO type output buffer, and sends the data information of each channel to the time management controlling unit 352. The demultiplexing unit 356 reads out the multiplex stream packet 208 from the FIFO type buffer at the backside of the header analyzing unit 355, and separates the stream data for each channel and sends it to the stream buffer 357. The stream buffer 357 has a configuration that make it possible to hold stream data per channel, and to read out from the sound data output controlling unit 353 and the video data output controlling unit 354.

On the other hand, as for the data which is to be read out from the stream buffer, the time management controlling unit 352 sends the sound data output controlling unit 353 and the video data output controlling unit 354 an instruction of reading the sound material data and the video material data, respectively, based on each of the sent channel data information. Note that as for the video material data, it gives an instruction of the screen layout and layer at the same time.

The sound data output controlling unit 353 confirms whether or not there is the notified sound material data in the stream buffer 357, notifies the time management controlling unit 352 that there is not sound material data when there is no data, notifies the time management controlling unit 352 of the channel number and the packet number of the stream data which is now being read out when there is the data, and sends the sound material data to the content sound outputting unit 105 so as to have it reproduce the sound (Step S37 in Fig. 13). Note that when the sound material data is compressed, it is expanded in the sound data output controlling unit 353 and the expanded data is sent to the content sound outputting unit 105.

Similarly, the video data output controlling unit 354 confirms whether or not there is the notified video material data in the stream buffer 357, notifies the time management controlling unit 352 that there is no video material data when there is no data, and notifies the time management controlling unit 352 of the channel number and the packet number of the stream data which is now being read out when there is the data. The video data output controlling unit 354 sends the video material data to the instructed screen position in the order of backward layer according to the screen layout and layer instructed by the time management controlling unit 352, and the content displaying unit 104 displays the data (Step S37 in Fig. 13).

When the sound data output controlling unit 353 or the video data output controlling unit 354 notifies that "there is no material data", the time management controlling unit 352 monitors the management status of the reproduction time, and sends the material identifier to the stream request controlling unit 358 to notify it to send the necessary material data when there is material data which is not being reproduced now but needs to be reproduced within a predetermined time. When the stream request controlling unit 358 receives the notice, it performs the same processing as above (Steps S33∼S37 in Fig. 13).

Also, the material identifier of the last material in the content reproduction is sent from the time management controlling unit 352 to the stream request controlling unit 358 along with the end identifier. The end identifier which is sent from the stream request controlling unit 358 according to the above procedure is recognized by the authoring unit 602, the billing unit 603 sends the price data as mentioned above at the time when the sending of the multiplex stream packet 208 of the last material is completed, and the distribution of the content is also completed.

The stream distribution of the content which the user selects and edits is performed, and the content is displayed in the content displaying unit 104 and the content sound outputting unit 105, in the above-mentioned manner.

As mentioned above, according to this embodiment, a user does not only selects an object but can edit a content via a graphical user interface and customize it in detail to his/her taste. Furthermore, since the control of the distribution (the initiative of sending request) is not under the distribution device 6 but under the reproduction device 5, the processing load on the distribution device 6 in controlling distribution is decentralized and reduced.

Although the content distribution and billing system according to the present invention has been explained above based on the embodiments, the present invention is not limited to these embodiments.

For example, although, according to the above embodiments, the characteristic processing units in the reproduction device and the reproduction device (the content element selecting unit, the content element selection editing unit, the scene description generating unit, the content controlling unit, the authoring unit, the billing unit, etc.) are realized as programs which are executed on the computer for general use, they may be realized on the logic circuit for exclusive use or the like. Also, the communication medium need not be a special one if two-way communication is possible, nor the communication media for an up-line and a down-line need not be identical to each other.

Also, as for the timing of generating the multiple stream packets in the distribution device, (I) when the data for the multiple stream packet (material data) is determined, the distribution device may generate and hold all the packets, and distribute the corresponding packet every time it receives each request (request information, etc.), or (II) the distribution device may generate and distribute the packet after receiving each request.

Similarly, as for the timing of the billing processing, (I) the charging price may be determined at the time when the subject data is selected, or (II) the charging price may be determined (added) according to the number of packets which have actually been distributed. That is because it is possible to apply the price system depending upon a user's selection of a content and the materials of the content in either method.

Furthermore, although according to the above embodiments, various databases (the scene description database, the video material database and the sound material database) are included in the distribution device, they may be included in a remote data server or the like which is connected to the distribution device via a transmission path. Similarly, the billing unit need not be included in the distribution device but may be included in a computer device for exclusive use for billing which is located in a credit loan company, etc.

## Claims

1. A content distribution system comprising a distribution device that distributes a content via a communication medium and a reproduction device for viewing and listening to the distributed content,
wherein the reproduction device includes:
a content selecting unit operable to accept from a user a selection of a content and a selection of a background video material and a foreground video material included in the content;
a selection information sending unit operable to send information on the selection which is accepted by the content selecting unit to the distribution device;
a content controlling unit operable to receive material data which is distributed from the distribution device and output the material data as video data; and
a content displaying unit operable to display the video data which is outputted from the content controlling unit, and
the distribution device includes a material data distributing unit operable to distribute corresponding material data to the reproduction device based on the information from the reproduction device.

2. The content distribution system according to Claim 1,
wherein the selection information sending unit sends identifiers which specifies the content and the background video material and the foreground video material included in the content which the user selects to the distribution device,
the content controlling unit performs a sending request of material data and a time management of the sending request based on scene description data which is sent from the distribution device, and receives the material data which is distributed from the distribution device and outputs the material data as video data,
the distribution device further includes a scene description data generating unit operable to generate scene description data which describes the material data included in the content including the background video material and the foreground video material and a reproduction timing of the material data based on the identifiers which are sent from the selection information sending unit, and send the scene description data to the reproduction device, and
the material data distributing unit selects corresponding material data based on the sending request from the reproduction device and distributes the material data to the reproduction device.

3. The content distribution system according to Claim 2,
wherein the content selecting unit accepts a selection of a sound material included in the content, in addition to the selection of the content and the background video material and the foreground video material included in the content,
the selection information sending unit sends an identifier which specifies the sound material to the distribution device, in addition to the identifiers which specifies the content and the background video material and the foreground video material included in the content,
the content controlling unit further receives the material data which is distributed from the distribution device and outputs the material data as sound data, and
the reproduction device further includes a content sound outputting unit operable to output the sound data which is outputted from the content controlling unit as a sound.

4. The content distribution system according to Claim 3,
wherein the scene description data generating unit includes:
a scene description database which holds in advance scene description data on a plurality of contents which are to be selected; and
an authoring unit operable to read out, from the scene description database, scene description data corresponding to a content indicated by the identifier which is sent from the selection information sending unit, revise the read-out scene description data with information which specifies a material indicated by the identifier, and generate the revised scene description data.

5. The content distribution system according to Claim 4,
wherein the distribution device further includes a billing unit operable to determine a charging price for the distribution of the content by referring to a price list which is held in advance based on the scene description data which is generated by the authoring unit, and generate price data indicating the charging price.

6. The content distribution system according to Claim 3,
wherein the material data distributing unit includes:
a material database which holds in advance a plurality of video material data and a plurality of sound material data which are to be selected; and
an authoring unit operable to read out corresponding video material data and sound material data from the material database based on the sending request or the scene description data from the reproduction device, and distribute the video material data or sound material data to the reproduction device.

7. The content distribution system according to Claim 6,
wherein the authoring unit multiplexes a plurality of elements included in the read-out video material data or sound material data, and distribute the multiplexed elements to the reproduction device.

8. The content distribution system according to Claim 6,
wherein the distribution device further includes a billing unit operable to determine a charging price for the distribution of the content by reading out prices corresponding to the video material data and the sound material data which the authoring unit reads out from a price list which is held in advance, and generate price data indicating the charging price.

9. The content distribution system according to Claim 3,
wherein the content controlling unit includes:
a scene description interpreting unit operable to generate material information that is a collection of information necessary for reproduction per material included in a content by interpreting the scene description data which is sent from the distribution device;
a time management controlling unit operable to give notice of material data necessary for a content reproduction and a time management and a synchronous management of the content reproduction and a sending notice of the material data based on the generated material information;
a video data output controlling unit operable to perform an output control of video material data based on the notice of the material data from the time management controlling unit;
a sound data output controlling unit operable to perform an output control of sound material data based on the notice of the material data from the time management controlling unit; and
a stream request controlling unit operable to generate request information including an identifier of material data whose sending is requested based on the sending notice of the material data from the time management controlling unit, and notifies the distribution device of the request information.

10. The content distribution system according to Claim 2,
wherein the content controlling unit includes:
a scene description interpreting unit operable to generate material information that is a collection of information necessary for reproduction per material included in a content by interpreting the scene description data which is sent from the distribution device;
a time management controlling unit operable to give notice of material data necessary for a content reproduction and a time management and a synchronous management of the content reproduction and a sending notice of the material data based on the generated material information;
a video data output controlling unit operable to perform an output control of video material data based on the notice of the material data from the time management controlling unit; and
a stream request controlling unit operable to generate request information including an identifier of material data whose sending is requested based on the sending notice of the material data from the time management controlling unit, and notifies the distribution device of the request information.

11. The content distribution system according to Claim 1,
wherein the content selecting unit accepts from a user a selection of a content and a selection of a background video material and a foreground video material included in the content, and accepts an editing of a display position and a reproduction time of the background video material and the foreground video material,
the reproduction device further includes a scene description data generating unit operable to generate scene description data which describes material data included in the content and a reproduction timing of the material data based on the selection and the editing which the content selecting unit accepts,
the selection information sending unit sends the scene description data along with the identifier which specifies the content which the user selects, and
the material data distributing unit distributes material data to the reproduction device based on the identifier and the scene description data which are sent from the reproduction device.

12. The content distribution system according to Claim 11,
wherein the content selecting unit accepts a selection of a sound material included in the content in addition to the selection of the content and the background video material and the foreground video material included in the content, and accepts an editing of a reproduction time of the sound material in addition to the editing of the display position and the reproduction time of the background video material and the foreground video material,
the scene description data generating unit generates scene description data based on the selection and the editing of the sound material in addition to the selection and the editing, and sends the scene description data along with the identifier which specifies the selected content to the distribution device,
the content controlling unit further receives the material data which is distributed from the distribution device and outputs the material data as sound data, and
the reproduction device further includes a content sound outputting unit operable to output the sound data which is outputted from the content controlling unit as a sound.

13. The content distribution system according to Claim 12,
wherein the material data distributing unit includes:
a material database which holds in advance a plurality of video material data and a plurality of sound material data which are to be selected; and
an authoring unit operable to read out corresponding video material data and sound material data from the material database based on the identifier and the scene description data from the reproduction device, and distribute the video material data and the sound material data to the reproduction device.

14. The content distribution system according to Claim 13,
wherein the distribution device further includes a billing unit operable to determine a charging price for the distribution of the content by referring to a price list which is held in advance based on the scene description data and generate price data indicating the charging price.

15. The content distribution system according to Claim 13,
wherein the authoring unit multiplexes a plurality of elements included in the read-out video material data or sound material data and distribute the multiplexed elements to the reproduction device.

16. The content distribution system according to Claim 13,
wherein the distribution device further includes a billing unit operable to determine a charging price for the distribution of the content by reading out prices corresponding to the video material data and the sound material data which the authoring unit reads out from a price list which is held in advance and generate price data indicating the charging price.

17. The content distribution system according to claim 12,
wherein the content selecting unit shows a user a virtual video object indicating a timing of a reproduction start and a reproduction end of the entire content including the selected sound material, and accepts an editing of a reproduction time of the sound material by the user's operation on the video object.

18. The content distribution system according to Claim 12,
wherein the material data which is distributed from the distribution device includes one or more packets including a body including the material itself and a header including stream information that is control information necessary for a reproduction of the body,
the content controlling unit includes:
a header analyzing unit operable to give notice of material data necessary for a content reproduction and a timing management and a synchronous management of the content reproduction based on the stream information of the header;
a video data output controlling unit operable to perform an output control of video material data based on the notice of the material data from the header analyzing unit; and
a sound data output controlling unit operable to perform an output control of sound material data based on the notice of the material data from the header analyzing unit.

19. The content distribution system according to Claim 11,
wherein the content selecting unit shows a user a virtual video object corresponding to the selected background video material and foreground video material, and accepts the editing of the display position including a position on a screen and an order of depth by a user's operation on the video object.

20. The content distribution system according to Claim 11,
wherein the content selecting unit holds in advance a virtual video object of a background video material and a foreground video material as a template by defining correspondence to each of a plurality of contents which are to be selected, shows a user the corresponding template according to the user's selection of a content, and accepts an editing of the display position including a position on a screen and an order of depth by the user's operation on the template.

21. The content distribution system according to Claim 11,
wherein the content selecting unit shows a user a virtual video object indicating a timing of a reproduction start and a reproduction end of the entire content including the selected background video material and foreground video material, and accepts an editing of a reproduction time of the video materials by the user's operation on the video object.

22. The content distribution system according to Claim 11,
wherein the material data which is distributed from the distribution device includes one or more packets including a body including the material itself and a header including stream information that is control information necessary for a reproduction of the body,
the content controlling unit includes:
a header analyzing unit operable to give notice of material data necessary for a content reproduction and a timing management and a synchronous management of the content reproduction based on the stream information of the header; and
a video data output controlling unit operable to perform an output control of video material data based on the notice of the material data from the header analyzing unit.

23. The content distribution system according to Claim 1,
wherein the content selecting unit accepts from a user a selection of a content and a selection of a background video material and a foreground video material included in the content, and accepts an editing of a display position and a reproduction time of the background video material and the foreground video material,
the reproduction device further includes a scene description data generating unit operable to generate scene description data which describes material data included in the content and a reproduction timing of the material data based on the selection and the editing, and output the scene description data along with an identifier which specifies the selected content,
the content controlling unit performs a sending request of material data and a time management of the sending request via the selection information sending unit based on the scene description data which is outputted from the scene description data generating unit, and receives the material data which is distributed from the distribution device and outputs the material data as video data, and
the material data distributing unit distributes corresponding material data to the reproduction device based on the identifier and the sending request from the reproduction device.

24. The content distribution system according to Claim 23,
wherein the content selecting unit accepts a selection of a sound material included in the content in addition to the selection of the content and the background video material and the foreground video material included in the content, and accepts an editing of a reproduction time of the sound material in addition to the editing of the display position and the reproduction time of the background video material and the foreground video material,
the scene description data generating unit generates scene description data based on the selection and the editing of the sound material in addition to the selection and the editing, and outputs the scene description data along with the identifier which specifies the selected content,
the content controlling unit further receives the material data which is distributed from the distribution device and outputs the material data as sound data, and
the reproduction device further includes a content sound outputting unit operable to output the sound data which is outputted from the content controlling unit as a sound.

25. The content distribution system according to Claim 24,
wherein the material data distribution unit includes:
a material database which holds in advance a plurality of video material data and a plurality of sound material data which are to be selected; and
an authoring unit operable to read out corresponding video material data and sound material data from the material database based on the identifier and the scene description data from the reproduction device, and distribute the video material data and the sound material data to the reproduction device.

26. The content distribution system according to Claim 25,
wherein the authoring unit multiplexes a plurality of elements included in the read-out video material data or sound material data and distribute the multiplexed elements to the reproduction device.

27. The content distribution system according to Claim 25,
wherein the distribution device further includes a billing unit operable to determine a charging price for the distribution of the content by reading out prices corresponding to the video material data and the sound material data which the authoring unit reads out from a price list which is held in advance, and generate price data indicating the charging price.

28. The content distribution system according to claim 24,
wherein the content selecting unit shows an user a virtual video object indicating a timing of a reproduction start and a reproduction end of the entire content including the selected sound material, and accepts an editing of a reproduction time of the sound material by the user's operation on the video object.

29. The content distribution system according to Claim 24,
wherein the content controlling unit includes:
a scene description interpreting unit operable to generate material information that is a collection of information necessary for a reproduction per material included in a content by interpreting the received scene description data;
a time management controlling unit operable to give notice of material data necessary for a content reproduction and a time management and a synchronous management of the content reproduction and a sending notice of the material data based on the generated material information;
a video data output controlling unit operable to perform an output control of video material data based on the notice of the material data from the time management controlling unit;
a sound data output controlling unit operable to perform an output control of sound material data based on the notice of the material data from the time management controlling unit; and
a stream request controlling unit operable to generate request information including an identifier of material data whose sending is requested based on the sending notice of the material data from the time management controlling unit and notify the distribution device of the request information.

30. The content distribution system according to Claim 23,
wherein the content selecting unit shows a user a virtual video object corresponding to the selected background video material and foreground video material, and accepts the editing of the display position including a position on a screen and an order of depth by the user's operation on the video object.

31. The content distribution system according to Claim 23,
wherein the content selecting unit holds in advance a virtual video object of a background video material and a foreground video material as a template by defining correspondence to each of a plurality of contents which are to be selected, shows a user a corresponding template according to the user's selection of a content, and accepts an editing of the display position including a position on a screen and an order of depth by the user's operation on the template.

32. The content distribution system according to Claim 23,
wherein the content selecting unit shows a user a virtual video object indicating a timing of a reproduction start and a reproduction end of the entire content including the selected background video material and foreground video material, and accepts an editing of a reproduction time of the video materials by the user's operation on the video object.

33. The content distribution system according to Claim 23,
wherein the content controlling unit includes:
a scene description interpreting unit operable to generate material information that is a collection of information necessary for a reproduction per material included in a content by interpreting the received scene description data;
a time management controlling unit operable to give notice of material data necessary for a content reproduction and a time management and a synchronous management of the content reproduction and a sending notice the material data based on the generated material information;
a video data output controlling unit operable to perform an output control of video material data based on the notice of the material data from the time management controlling unit; and
a stream request controlling unit operable to generate request information including an identifier of material data whose sending is requested based on the sending notice of the material data from the time management controlling unit and notify the distribution device of the request information.

34. A reproduction device for receiving a content which is distributed from a distribution device via a communication medium and for viewing and listening to the content, the reproduction device comprising:
a content selecting unit operable to accept from a user a selection of a content and a selection of a background video material and a foreground video material included in the content;
a selection information sending unit operable to send information on the selection which the content selecting unit accepts to the distribution device;
a content controlling unit operable to receive material data which is distributed from the distribution device based on the information on the selection and output the material data as video data; and
a content displaying unit operable to display video data which is outputted from the content controlling unit.

35. The reproduction device according to Claim 34,
wherein the selection information sending unit sends identifiers which specify the content and the background video material and the foreground video material included in the content which the user selects to the distribution device,
the distribution device generates scene description data which describes material data included in the content including the background video material and the foreground video material and a reproduction timing of the material data based on the identifiers which are sent from the selection information sending unit, and sends the scene description data to the reproduction device,
the content controlling unit performs a sending request of material data and a time management of the sending request based on the scene description data which is sent from the distribution device, and receives the material data which is distributed from the distribution device and outputs the material data as video data, and
the distribution device selects corresponding material data based on the sending request from the reproduction device and distributes the material data to the reproduction device.

36. The reproduction device according to Claim 35,
wherein the content selecting unit accepts a selection of a sound material included in the content in addition to the selection of the content and the background video material and the foreground video material included in the content,
the selection information sending unit sends an identifier which specifies the sound material to the distribution device in addition to the identifiers which specify the content and the background video material and the foreground video material included in the content,
the content controlling unit further receives the material data which is distributed from the distribution device and outputs the material data as sound data, and
the reproduction device further includes a content sound outputting unit operable to output the sound data which is outputted from the content controlling unit as a sound.

37. The reproduction device according to Claim 35,
wherein the content controlling unit includes:
a scene description interpreting unit operable to generate material information that is a collection of information necessary for a reproduction per material included in a content by interpreting the scene description data which is sent from the distribution device;
a time management controlling unit operable to give notice of material data necessary for a content reproduction and a time management and a synchronous management of the content reproduction and a sending notice of the material data based on the generated material information;
a video data output controlling unit operable to perform an output control of video material data based on the notice of the material data from the time management controlling unit; and
a stream request controlling unit operable to generate request information including an identifier of material data whose sending is requested based on the sending notice of the material data from the time management controlling unit and notifies the distribution device of the request information.

38. The reproduction device according to Claim 34,
wherein the content selecting unit accepts from a user a selection of a content and a selection of a background video material and a foreground video material included in the content, and accepts an editing of a display position and a reproduction time of the background video material and the foreground video material,
the reproduction device further includes a scene description data generating unit operable to generate scene description data which describes material data included in the content and a reproduction timing of the material data based on the selection and the editing which the content selecting unit accepts,
the selection information sending unit sends the scene description data along with an identifier which specifies the content which the user selects, and
the distribution device distributes the material data based on the identifier and the scene description data which are sent from the reproduction device.

39. The reproduction device according to Claim 38,
wherein the content selecting unit accepts a selection of a sound material included in the content in addition to the selection of the content and the background video material and the foreground video material included in the content, and accepts an editing of a reproduction time of the sound material in addition to the editing of the display position and the reproduction time of the background video material and the foreground video material,
the scene description data generating unit generates scene description data based on the selection and editing of the sound material in addition to the selection and the editing, and sends the scene description data along with an identifier which specifies the selected content to the distribution device,
the content controlling unit further receives the material data which is distributed from the distribution device and outputs the material data as sound data, and
the reproduction device further includes a content sound outputting unit operable to output the sound data which is outputted from the content controlling unit as a sound.

40. The reproduction device according to Claim 38,
wherein the content selecting unit shows a user a virtual video object corresponding to the selected background video material and foreground video material, and accepts the editing of the display position including a position on a screen and an order of depth by the user's operation on the video object.

41. The reproduction device according to Claim 38,
wherein the content selecting unit holds in advance a virtual video object of the background video material and the foreground video material as a template by defining correspondence to each of a plurality of contents which are to be selected, shows a user a corresponding template according to the user's selection of a content, and accepts an editing of the display position including a position on a screen and an order of depth by the user's operation on the template.

42. The reproduction device according to Claim 38,
wherein the content selecting unit shows a user a virtual video object indicating a timing of a reproduction start and a reproduction end of the entire content including the selected background video material and foreground video material, and accepts an editing of a reproduction time of the video materials by the user's operation on the video object.

43. The reproduction device according to Claim 38,
wherein the material data which is distributed from the distribution device includes one or more packets including a body including the material itself and a header including stream information that is control information necessary for a reproduction of the body,
the content controlling unit includes:
a header analyzing unit operable to give notice of material data necessary for a content reproduction and a timing management and a synchronous management of the content reproduction based on the stream information of the header; and
a video data output controlling unit operable to perform an output control of video material data based on the notice of the material data from the header analyzing unit.

44. The reproduction device according to Claim 34,
wherein the content selecting unit accepts from a user a selection of a content and a selection of a background video material and a foreground video material included in the content, and accepts an editing of a display position and a reproduction time of the background video material and the foreground video material,
the reproduction device further includes a scene description data generating unit operable to generate scene description data which describes material data included in the content and a reproduction timing of the material data based on the selection and the editing, and output the scene description data along with an identifier which specifies the selected content,
the content controlling unit performs a sending request of material data and a time management of the sending request via the selection information sending unit based on scene description data which is outputted from the scene description data generating unit, and receives the material data which is distributed from the distribution device and outputs the material data as video data, and
the distribution device distributes corresponding material data to the reproduction device based on the identifier and the sending request from the reproduction device.

45. The reproduction device according to Claim 44,
wherein the content selecting unit accepts a selection of a sound material included in the content in addition to the selection of the content and the background video material and the foreground video material included in the content, and accepts an editing of a reproduction time of the sound material in addition to the editing of the display position and the reproduction time of the background video material and the foreground video material,
the scene description data generating unit generates scene description data based on the selection and the editing of the sound material in addition to the selection and the editing, and outputs the scene description data along with the identifier which specifies the selected content,
the content controlling unit further receives the material data which is distributed from the distribution device and outputs the material data as sound data, and
the reproduction device further includes a content sound outputting unit operable to output the sound data which is outputted from the content controlling unit as a sound.

46. The reproduction device according to Claim 44,
wherein the content selecting unit shows a user a virtual video object corresponding to the selected background video material and foreground video material, and accepts the editing of the display position including a position on a screen and an order of depth by the user's operation on the video object.

47. The reproduction device according to Claim 44,
wherein the content selecting unit holds in advance a virtual video object of the background video material and the foreground video material as a template by defining correspondence to each of a plurality of contents which are to be selected, shows a user a corresponding template according to the user's selection of a content, and accepts an editing of the display position including a position on a screen and an order of depth by the user's operation on the template.

48. The reproduction device according to Claim 44,
wherein the content selecting unit shows a user a virtual video object indicating a timing of a reproduction start and a reproduction end of the entire content including the selected background video material and foreground video material, and accepts an editing of a reproduction time of the video materials by the user's operation on the video object.

49. The reproduction device according to Claim 44,
wherein the content controlling unit includes:
a scene description interpreting unit operable to generate material information that is a collection of information necessary for a reproduction per material included in a content by interpreting the received scene description data;
a time management controlling unit operable to give notice of material data necessary for a content reproduction and a time management and a synchronous management of the content reproduction and a sending notice of the material data based on the generated material information;
a video data output controlling unit operable to perform an output control of video material data based on the notice of the material data from the time management controlling unit; and
a stream request controlling unit operable to generate request information including an identifier of material data whose sending is requested based on the sending notice of the material data from the time management controlling unit, and notifies the distribution device of the request information.

50. A distribution device that distributes a content to a reproduction device via a communication medium,
wherein the reproduction device includes:
a content selecting unit operable to accept from a user a selection of a content and a selection of a background video material and a foreground video material included in the content;
a selection information sending unit operable to send identifiers which specify the content and the background video material and the foreground video material included in the content which the user selects to the distribution device;
a content controlling unit operable to perform a sending request of the material data and a time management of the sending request based on the scene description data which is sent from the distribution device, and receive material data which is distributed from the distribution device and output the material data as video data; and
a content displaying unit operable to display the video data which is outputted from the content controlling unit, and
the distribution device includes:
a scene description data generating unit operable to generate the scene description data which describes the material data included in the content including the background video material and the foreground video material and the reproduction timing of the material data based on the identifiers which are sent from the selection information sending unit and send the scene description data to the reproduction device;
a material data distributing unit operable to select corresponding material data based on the sending request from the reproduction device and distribute the material data to the reproduction device; and
a billing unit operable to determine a charging price for the distribution of the content by referring to a price list which is held in advance based on the scene description data which is generated by the scene description data generating unit, and generate price data indicating the charging price.

51. A distribution device that distributes a content to a reproduction device via a communication medium,
wherein the reproduction device includes:
a content selecting unit operable to accept from a user a selection of a content and a selection of a background video material and a foreground video material included in the content, and accept an editing of a display position and a reproduction time of the background video material and the foreground video material;
a scene description data generating unit operable to generate scene description data which describes material data included in the content and a reproduction timing of the material data based on the selection and the editing which the content selecting unit accepts;
a selection information sending unit operable to send the scene description data along with an identifier which specifies the content which the user selects;
a content controlling unit operable to receive the material data which is distributed from the distribution device and output the material data as video data; and
a content displaying unit operable to display the video data which is outputted from the content controlling unit, and
the distribution device includes:
a material data distributing unit operable to distribute material data to the reproduction device based on the identifier and the scene description data which are sent from the reproduction device; and
a billing unit operable to determine a charging price for the distribution of the content by referring to a price list which is held in advance based on the scene description data and generate price data indicating the charging price.

52. A distribution device that distributes a content to a reproduction device via a communication medium,
wherein the reproduction device includes:
a content selecting unit operable to accept from a user a selection of a content and a selection of a background video material and a foreground video material included in the content, and accept an editing of a display position and a reproduction time of the background video material and the foreground video material;
a scene description data generating unit operable to generate scene description data which describes material data included in the content and a reproduction timing of the material data based on the selection and the editing which the content selecting unit accepts;
a content controlling unit operable to perform a sending request of the material data to the distribution device and a time control of the sending request based on the scene description data which is outputted from the scene description data generating unit, and receive the material data which is distributed from the distribution device and output the material data as video data; and
a content displaying unit operable to display the video data which is outputted from the content controlling unit, and
the distribution device includes:
a material database which holds in advance a plurality of video material data and a plurality of sound material data which are to be selected;
an authoring unit operable to read out corresponding video material data and sound material data from the material database based on the identifiers and the scene description data from the reproduction device, and distribute the video material data and the sound material data to the reproduction device; and
a billing unit operable to determine a charging price for the distribution of the content by reading out prices corresponding to the video material data and the sound material data which the authoring unit reads out from a price list which is held in advance, and generate price data indicating the charging price.

53. A content distribution method for a system comprising a distribution device that distributes a content via a communication medium and a reproduction device for viewing and listening to the distributed content, the content distribution method including:
a step (A) which is executed by the reproduction device; and
a step (B) which is executed by the distribution device,
wherein the step (A) includes:
a content selecting step for accepting from a user a selection of a content and a selection of a background video material and a foreground video material included in the content;
a selection information sending step for sending information on the selection which is accepted in the content selecting step to the distribution device;
a content controlling step for receiving material data which is distributed from the distribution device and outputting the material data as video data; and
a content displaying step for displaying the video data which is outputted in the content controlling step, and
the step (B) includes a material data distributing step for distributing corresponding material data to the reproduction device based on the information from the reproduction device.

54. The content distribution method according to Claim 53,
wherein in the selection information sending step, identifiers which specify the content and the background video material and the foreground video material included in the content which the user selects are sent to the distribution device,
in the content controlling step, a sending request of material data and a time control of the sending request are performed based on scene description data which is sent from the distribution device, and the material data which is distributed from the distribution device is received and outputted as video data,
the step (B) further includes a scene description data generating step for generating scene description data which describes material data included in the content including the background video material and the foreground video material and a reproduction timing of the material data based on the identifiers which are sent in the selection information sending step, and sending the scene description data to the reproduction device, and
in the material data distributing step, corresponding material data is selected based on the sending request from the reproduction device and the material data is distributed to the reproduction device.

55. The content distribution method according to Claim 53,
wherein in the content selecting step, a selection from a user of a content whose distribution is desired and a background video material and a foreground video material included in the content is accepted, and an editing of a display position and a reproduction time of the background video material and the foreground video material is accepted,
the step (A) further includes a scene description data generating step for generating scene description data which describes material data included in the content and a reproduction timing of the material data based on the selection and the editing which the content selecting unit accepts,
in the selection information sending step, the scene description data along with an identifier which specifies the content which the user selects are sent to the distribution device, and
in the material data distributing step, material data is distributed to the reproduction device based on the identifier and the scene description data which are sent from the reproduction device.

56. The content distribution method according to claim 53,
wherein in the content selecting step, a selection from a user of a content whose distribution is desired and a background video material and a foreground video material included in the content is accepted, and an editing of a display position and a reproduction time of the background video material and the foreground video material is accepted,
the step (A) further includes a scene description data generating step for generating scene description data which describes material data included in the content and a reproduction timing of the material data based on the selection and the editing, and outputting the scene description data along with an identifier which specifies the selected content,
in the content controlling step, a sending request of material data to the distribution device via the selection information sending step and a time control of the sending request are performed based on scene description data which is outputted in the scene description data generating step, and the material data which is distributed from the distribution device is received and outputted as video data, and
in the material data distributing step, corresponding material data is distributed to the reproduction device based on the identifier and the sending request from the reproduction device.

57. A program for a reproduction device that receives and views and listens to a content which is distributed from a distribution device via a communication medium,
the program causing a computer to function as:
a content selecting unit operable to accept from a user a selection of a content and a selection of a background video material and a foreground video material included in the content;
a selection information sending unit operable to send information on the selection which the content selecting unit accepts to the distribution device;
a content controlling unit operable to receive material data which is distributed from the distribution device based on the information on the selection and output the material data as video data; and
a content displaying unit operable to display the video data which is outputted from the content controlling unit.

58. The program according to Claim 57,
wherein the selection information sending unit sends identifiers which specify the content and the background video material and the foreground video material included in the content which the user selects to the distribution device,
the distribution device generates scene description data which describes material data included in the content including the background video material and the foreground video material and a reproduction timing of the material data based on the identifiers which are sent from the selection information sending unit, and sends the scene description data to the reproduction device,
the content controlling unit performs a sending request of material data and a time control of the sending request based on the scene description data which is sent from the distribution device, and receives the material data which is distributed from the distribution device and outputs the material data as video data, and
the distribution device selects corresponding material data based on the sending request from the reproduction device and distributes the selected material data to the reproduction device.

59. The program according to Claim 57,
wherein the content selecting unit accepts from a user a selection of a content and a selection of a background video material and a foreground video material included in the content, and accepts an editing of a display position and a reproduction time of the background video material and the foreground video material,
the program further causes a computer to function as a scene description data generating unit operable to generate scene description data which describes material data included in the content and a reproduction timing of the material data based on the selection and the editing which the content selecting unit accepts,
the selection information sending unit sends the scene description data along with an identifier which specifies the content which the user selects, and
the distribution device distributes the material data to the reproduction device based on the identifier and the scene description data which are sent from the reproduction device.

60. The program according to Claim 57,
wherein the content selecting unit accepts from a user a selection of a content and a selection of a background video material and a foreground video material included in the content, and accepts an editing of a display position and a reproduction time of the background video material and the foreground video material,
the program further causes a computer to function as a scene description data generating unit operable to generate scene description data which describes material data included in the content and a reproduction timing of the material data based on the selection and the editing and output the scene description data along with an identifier which specifies the selected content,
the content controlling unit performs a sending request of material data to the distribution device via the selection information sending unit and a time control of the sending request based on the scene description data which is outputted from the scene description data generating unit, and receives the material data which is distributed from the distribution device and outputs the material data as video data, and
the distribution device distributes corresponding material data to the reproduction device based on the identifier and the sending request from the reproduction device.
